# EUROPÄISCHE PATENTSCHRIFT

(11) **EP 2 367 865 B1**
(45) Veröffentlichungstag und Bekanntmachung des Hinweises auf die Patenterteilung: **17.04.2013**
(21) Anmeldenummer: 09760107.4
(22) Anmeldetag: 20.11.2009
(51) Int. Cl.: C08G 65/00, C08L 71/00

(54) **ZUSAMMENSETZUNGEN UMFASSEND GLYCIDYLETHER-COPOLYMERE**
COMPOSITIONS COMPRISING GLYCIDYL ETHER COPOLYMERS
COMPOSITIONS COMPRENANT DES COPOLYMÈRES DE GLYCIDYLÉTHER

(30) Priorität: 24.11.2008 DE 102008058767; 04.09.2009 DE 102009040068
(43) Veröffentlichungstag der Anmeldung: 28.09.2011
(73) Patentinhaber: BYK-Chemie GmbH, 46483 Wesel (DE)
(72) Erfinder: JAUNKY, Guillaume, 46485 Wesel (DE); GÖBELT, Bernd, 46487 Wesel (DE); OMEIS, Jürgen, 46286 Dorsten-Lembeck (DE)
(74) Vertreter: Kutzenberger, Helga
(86) Internationale Anmeldenummer: PCT/EP2009/008281
(87) Internationale Veröffentlichungsnummer: WO 2010/057654

(56) Entgegenhaltungen:
- EP-A2- 0 103 297
- EP-A2- 0 449 775
- DE-A1- 10 239 932
- PABLO TABOADA: "Micellization and Drug Solubilization in Aqueous Solutions of a Diblock Copolymer of Ethylene Oxide and Phenyl Glycidyl Ether" LANGMUIR, Bd. 22, 8. Januar 2006 (2006-01-08), Seiten 7465-7470, XP002570565

## Beschreibung

Die vorliegende Erfindung betrifft eine Zusammensetzung gemäβ Anspruch 1 umfassend wenigstens ein amphiphiles Glycidylether-Copolymeres aufgebaut aus den in der vorliegende Anmeldung aufgeführten Struktureinheiten **I** bis V, wobei die Struktureinheiten gradientenartig, statistisch oder blockartig entsprechend den Angaben in der vorliegenden Anmeldung angeordnet sein können, als Dispergiermittel und einen dispergierten Feststoff, vorzugsweise ein dispergiertes Pigment, oder als Emulgator und ein auszuhärtendes, ungesättigtes Polymersystem in Form einer Wasser in Öl Emulsion.

Um Feststoffe in einem flüssigen oder festen Medium, wie z. B. in Lacken, wässrigen oder organische Lösungsmittel aufweisende Dispersionen oder Polymerformmassen, stabil und homogen zu verteilen, werden Dispergiermittel als Hilfsstoffe benötigt.

Dafür müssen Dispergiermittel zwei unterschiedliche Funktionen erfüllen.

Erstens müssen sie mit der Feststoffoberfläche so in Wechselwirkung treten können, dass deren Benetzung erleichtert wird. Dies wird dadurch erreicht, dass das Dispergiermittel bestimmte chemische Gruppen, sog. Haftgruppen, aufweist. Beispiele für hydrophile Haftgruppen sind tert.-Amino-Gruppen, Ammoniumsalze, Phosphorsäure-Gruppen, Carbonsäure-Gruppen, Sulfonsäure-, Amid-, Urethan- oder Harnstoff-Gruppierungen.

Für wässrige Dispersionen eignen sich als Haftgruppen hydrophobe Gruppen wie z. B. Alkylreste, Phenyl- oder Benzyl-Reste, wie sie z. B. in Adv. Mater. 1998, 10, 1215-1218 beschrieben sind.

Zweitens müssen Dispergiermittel mit dem Dispergiermedium gut verträglich sein.

Für organische Dispergiermedien müssen daher Dispergiermittel hydrophobe Reste wie z. B. länger kettige Alkyl-Reste oder Aryl-Reste aufweisen. Für wässrige Dispergiermedien sollten die Dispergiermittel wasserlösliche, hydrophile Reste, wie z. B. versalzte Carbonsäuren aufweisen.

Durch Polymerisation von Monomeren erhält man polymere Dispergiermittel, die ggfs. nachträglich durch eine polymerisationsanaloge Reaktion z. B. in den Seitenketten modifiziert werden können. Je nach Durchführung der Polymerisation sind die Monomeren in der Polymerkette statistisch oder alternierend, gradientenartig oder blockartig eingebaut. Bei einem statistischen oder alternierenden Aufbau der Polymerketten zeigen solche Dispergiermittel sehr gute feststoffbenetzende Eigenschaften, aber im Vergleich zu Dispergiermitteln mit einem gradientenartigen oder blockartigen Aufbau eine schlechtere Stabilisierung der Feststoffdispersion. Dagegen kann der blockartige Aufbau von Dispergiermitteln mit sehr guten stabilisierenden Eigenschaften dazu führen, dass bei stark unterschiedlich polaren Blöcken es zu einer Micellenbildung der Polymerketten kommt, die zu einem schlechteren Benetzungsverhalten der Feststoffoberfläche des zu dispergierenden Feststoffes führt.

Eine große Gruppe von Dispergiermitteln basiert auf Polymeren aus ethylenisch ungesättigten Monomeren wie z. B. Acrylaten oder Methacrylaten, wobei die zum Einsatz kommenden Polymeren sowohl einen statistischen, gradientenartigen oder blockartigen Aufbau aufweisen können. Sofern Polymere bzw. Copolymere einen statistischen Aufbau aufweisen, werden sie durch radikalische Polymerisation mit Hilfe von üblichen Startern hergestellt. Sofern sie einen gradientenartigen oder blockartigen Aufbau aufweisen, werden sie durch eine kontrollierte Polymerisation wie z. B. atom transfer radical polymerisation (ATRP), group transfer polymerisation (GTP), nitroxyl mediated polymerisation (NMP) oder reversible addition fragmentation chain transfer process (RAFT) hergestellt. Dispergiermittel auf Basis solcher unterschiedlich aufgebauter Polymere sind in einer Vielzahl von Patentschriften erwähnt, von denen EP 1416019, US 4,755,563, US 5,085,698, US 6,326,420, US 6,455,628, US 6,462,125, US 6,642,301, US 6,849,679 und WO 00/40630 repräsentativ aufgeführt werden.

Für die Herstellung von Copolymeren mit einem blockartigen oder gradientenartigen Aufbau nach kontrollierten Polymerisationstechnologien werden üblicherweise spezielle und damit teure Initiatoren oder Katalysatoren benötigt.

Eine weitere bedeutende Gruppe von Dispergiermitteln beruht auf Polyalkylenoxiden (US 2002/0011183, US2005/0085563, US 6,552,091, WO2007087961).

Durch polymerisation von Ethylenoxid zeigen diese Dispergiermittel einen hydrophilen Charakter, während durch Copolymerisation von Propylen-, Butylen- oder Styrol-oxid hydrophobe Gruppierungen in das dem Dispergiermittel zu Grunde liegende Polymere eingearbeitet werden können. Da es nur eine geringe Auswahl an kommerziell verfügbaren Alkylenoxiden gibt und bei diesen Polymeren als funktionelle Gruppe für Modifikationen nur endständige OH-Gruppen in Frage kommen, gibt es nur eine eingeschränkte Möglichkeit zur Modifikation der Polymeren und damit für deren Einsatz als Dispergiermittel.

Es besteht daher ein Bedarf an Dispergiermitteln, die sowohl in hydrophilen Dispergiermedien als auch in hydrophoben Dispergiermedien und damit für eine Vielzahl von Anwendungsgebieten eingesetzt werden können, ohne dass sie die Nachteile der Feststoffdispersionen des Standes der Technik aufzuweisen.

Aufgabe der vorliegende Erfindung war es daher, Mittel zur Phasenvermittlung zwischen fest und flüssig bzw. flüssig-flüssig zur Verfügung zu stellen, die sowohl in hydrophoben als auch in hydrophilen Medien zu entsprechend lagerstabilen Systemen mit breiten Anwendungsmöglichkeiten führen.

Diese Aufgabe wird durch das zur Verfügung stellen der erfindungsgemäßen Zusammensetzungen gemäβ Anspruch 1 umfassend wenigstens ein amphiphiles Glycidylether-Copolymeres aufgebaut aus der folgenden Struktureinheit I und wenigstens einer der folgenden Struktureinheiten II- V, wobei die Struktureinheit IV immer zusammen mit wenigstens einer der Struktureinheiten II, III und V angeordnet ist, 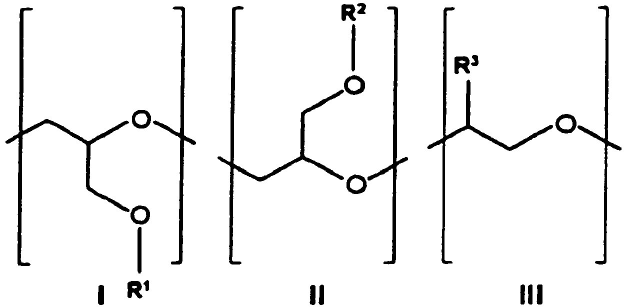 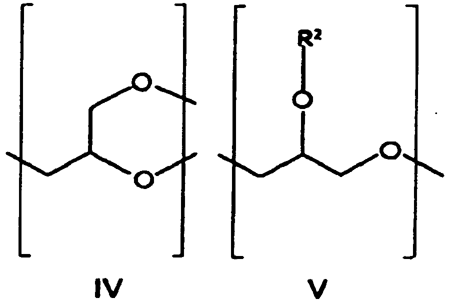 und den Endgruppen -O-R⁴ und/oder R⁵, worin
R¹ für einen linearen oder verzweigten Alkylrest mit vorzugsweise 1-20 C-Atomen oder einen cyclischen Alkylrest mit vorzugsweise 4-10 C-Atomen steht, oder für einen Arylrest, einen Arylalkylenrest, einen Heteroarylrest oder Heteroarylalkylenrest steht, bei dem jeweils der Aryl- bzw. Heteroarylring substituiert sein kann;
R², gleich oder verschieden, für Wasserstoff und/oder für eine Carboxymethylengruppe oder ein entsprechendes Salz oder eine entsprechende Alkylestergruppe, ein Monoester-Rest der Maleinsäure oder ein entsprechendes Monosalz, ein Phosphorsäure-Rest oder ein entsprechendes Salz, ein Sulfonsäure-Rest oder ein entsprechendes Salz oder ein Sulfosuccinsäure-Rest oder ein entsprechendes Salz,oder bis zu höchstens 20 % der Reste R₂ für eine OH-Schutzgruppe, vorzugsweise eine Acetalgruppe oder eine t-Butylgruppe stehen;
R³ für Wasserstoff und/oder einen linearen oder verzweigten Alkylrest mit 1 bis 6 C-Atomen und/oder einen cyclischen Alkylrest mit 4-6 C-Atomen steht;
R⁴ für einen linearen, verzweigten oder cyclischen Alkylrest, der mit wenigstens einem Arylrest oder Arylalkylenrest substituiert sein kann, einen ggfs. substituierten Arylrest oder Arylalkytenrest oder einen Polyalkylenoxid Rest, der vorzugsweise wenigstens 2, besonders bevorzugt 2 bis 20 wiederkehrende Einheiten mit einer Alkoxygruppe mit vorzugsweise 1-5 C-Atomen aufweist, steht;
R⁵, gleich oder verschieden von R², die Bedeutung von R² mit Ausnahme einer OH-Schutzgruppe, hat,
wobei die Struktureinheiten gradientenartig, statistisch oder jeweils blockartig angeordnet sind und
wobei die Struktureinheit I mindestens 2-fach, vorzugsweise 2 bis 100, besonders bevorzugt 2 bis 50 fach vorliegt, wovon mindestens eine der Struktureinheiten I einen aromatischen Rest trägt, und wobei der Anteil der ggfs. vorhandenen Struktureinheiten IV 0 bis höchstens 50 % der Gesamtzahl der Struktureinheiten II bis V beträgt,
als Dispergiermittel und wenigstens einen dispergierten Feststoff, vorzugsweise wenigstens ein dispergiertes Pigment,
oder als Emulgator und ein auszuhärtendes, ungesättigtes Polymersystem in Form einer Wasser in Öl Emulsion.

Polyglycidyletherblockcopolymere sind zwar bereits aus dem Stande der Technik bekannt, werden aber keineswegs als Dispergiermittel wie in den erfindungsgemäßen Zusammensetzungen eingesetzt.

So werden in US-A-4485211 Polyglycidyletherblockcopolymere mittels kathionischer Ringöffnungspolymerisation und ggfs. Modifizierung zu quartären Ammoniumsalzen beschrieben.

Diese Blockcopolymeren finden gem. Offenbarung in dieser US Patentschrift vorzugsweise als difunktionelle Kettenverlängerungsmittel zur Herstellung linearer, relativ hochmolekularer Polymere Verwendung. Auch ihr Einsatz als viskositätserhöhendes Mittel, als dispergierendes Additiv für Polymerisationen oder als Mineraltrennungsmittel wird dort erwähnt.

In EP-A-0406168 wird ein Produkt beschrieben, bei dem eine Phenylglycidylether-Einheit als Endgruppe an ein Polyalkylenoxid angelagert ist. Solche Produkte, die ggfs. noch modifiziert worden sind und ggfs. in Kombination mit weiteren anionischen oder nicht ionischen Additiven eingesetzt werden, können u. a. als Färbehilfsmittel verwendet werden.

In den Veröffentlichungen in Langmuir 2006, 22, 7465-7470 bzw. Langmuir 2005, 21, 5263-5271 wird jeweils die Micellenbildung von bestimmten Glycidylblockoopolymeren als eine Möglichkeit zur Löslichkeitsverbesserung von schwer löslichen, pharmazeutischen Wirkstoffen, wie Griseofulvin, beschrieben. Micellenbildung ist aber gerade eine im Vergleich zu der mit den erfindungsgemäßen Zusammensetzung angestrebten Wirkung unerwünschte Wirkung, da erfindungsgemäß stabile Dispersionen erhalten werden sollen. Eine wässrige Zusammensetzung aus einem Glycidylblockcopolymeren aus 5 Phenylglycidylether-Einheiten und 67 Ethylenoxid-Einheiten und einem pharmazeutischen Wirkstoff, wie Griseofulvin, ist daher von der vorliegenden Erfindung ausgenommen, ebenso wie eine wässrige Zusammensetzung aus einem Glycidylblockcopolymeren bestehend aus 2 Blöcken aus jeweils 71 oder 62 oder 38 Ethylenoxid-Einheiten und einem dazwischenliegenden Block aus 7, 8 oder 12 Phenylglycidylether-Einheiten und einem schwerlöslichen pharmazeutischen Wirkstoff, wie Griseofulvin.

Die Glycidylether-Copolymeren, die in den erfindungsgemäßen Zusammensetzungen als Dispergiermittel oder Emulgator vorliegen, sind statistisch oder gradientenartig oder blockartig, vorzugsweise gradientenartig oder blockartig, besonders bevorzugt blockartig, aufgebaut.

Die erfindungsgemäß verwendeten Glycidylether-Copolymere weisen die wiederkehrende Struktureinheit I auf, wobei das Glycidylether-Copolymere wenigstens einen Block aus dieser wiederkehrenden Struktureinheit aufweist und wenigstens eine der wiederkehrenden Struktureinheit I einen Arylrest Rest enthält.

In einer weiteren bevorzugten Ausführungsfonn weist das Glycidylether-Copolymere die wiederkehrende Struktureinheit I und die wiederkehrende Struktureinheit II auf, wobei besonders bevorzugt das Glycidylether-Copolymere wenigstens einen Block aus der wiederkehrenden Struktureinheit I und wenigstens einen Block aus der wiederkehrenden Struktureinheit II aufweist oder wenigstens einen Block aus der wiederkehrenden Struktureinheit I und wenigstens einen Block aus copolymerisierten Struktureinheiten I und II.

Je nach Einsatzgebiet kann das erfindungsgemäß verwendete Glycidylether-Copolymere auch aus wiederkehrenden Struktureinheiten I und wiederkehrenden Struktureinheiten III, vorzugsweise aus wenigstens einem Block aus der wiederkehrenden Struktureinheit I und wenigstens einem Block aus der wiederkehrenden Struktureinheit III oder wenigstens einen Block aus copolymerisierten Struktureinheiten I und III aufgebaut sein.

In den erfindungsgemäßen Zusammensetzungen können auch Glycidylether-Copolymere aus den wiederkehrenden Struktureinheiten I bis III vorliegen. Vorzugsweise weisen die Glycidylether-Copolymere wenigstens einen Block aus der wiederkehrenden Struktureinheit I und wenigstens einen Block aus den copolymerisierten, wiederkehrenden Struktureinheiten II und III oder jeweils wenigstens einen Block aus der wiederkehrenden Struktureinheit II bzw. der wiederkehrenden Struktureinheit III auf.

Verzweigte Glycidylether-Copolymere enthalten neben den wiederkehrenden Struktureinheiten I wenigstens eine ggfs. wiederkehrende Struktureinheit IV, die zumindest mit einer wiederkehrenden Struktureinheit II und/oder III und/oder V copolymerisiert ist, wobei die wiederkehrenden Struktureinheiten gradientartig oder statistisch, besonders bevorzugt statistisch angeordnet sein können.

Sofern die Struktureinheit IV in dem Glycidylether-Copolymeren vorhanden ist, so beträgt deren Anteil höchstens 50 %, vorzugsweise höchstens 30 %, ganz besonders bevorzugt höchstens 20 % der Gesamtzahl der vorhandenen Struktureinheiten II bis V.

Die erfindungsgemäß zum Einsatz kommenden Glycidylether-Copolymeren weisen die vorzugsweise hydrophobe Struktureinheit I, vorzugsweise 2 bis 100, besonders bevorzugt 2 bis 50, ganz besonders bevorzugt 2 bis 20 fach auf, wovon mindestens eine der Struktureinheiten I einen aromatischen Rest trägt. Besonders bevorzugte Glycidylether-Copolymere sind solche, bei denen die Anzahl der Struktureinheiten II bis V mindestens der Anzahl der Struktureinheit I entspricht, vorzugsweise die Anzahl der Struktureinheiten II bis V um mindestens 20 %, besonders bevorzugt um mindestens 50 % höher liegt als die Anzahl der Struktureinheiten I.

Die Struktureinheit I leitet sich bevorzugt von einem Glycidylether der allgemeinen Formel (X) 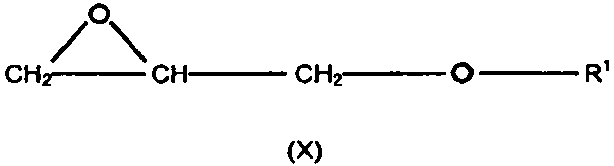 ab, in der R¹ für einen linearen oder verzweigten Alkylrest, mit vorzugsweise C1 bis C20, besonders bevorzugt für einen Methyl-, Ethyl-, Propyl-, Butyl-, 2-EthylhexylRest, oder für einen cyclischen Alkylrest mit vorzugsweise 4 bis 12 C-Atomen, besonders bevorzugt für einen Cyclohexylrest, für einen Arylrest mit 6 bis 10 C-Atomen, der mit einem kurzkettigen Alkylrest, vorzugsweise einen Methyl-, Ethyl- und/oder Propyl-Rest oder einem Hallogenatom, vorzugsweise Chlor, substituiert sein kann, besonders bevorzugt für einen Phenylrest oder Naphthylrest, oder für einen Arylalkylenrest mit vorzugsweise 7 bis 10 C-Atomen, wobei der Arylrest mit kurzkettigen Alkylresten, vorzugsweise mit einem Methyl-, Ethyl- und/oder Propyl-Rest substituiert sein kann, besonders bevorzugt für einen Benzylrest, oder für einen heteroaromatischen Rest mit wenigstens einem Sauerstoff- oder Stickstoff-Atom im aromatischen Ring, wobei der aromatische Ring noch mit kurzkettigen Alkylresten, vorzugsweise einen Methyl-, Ethyl- und/oder Propyl-Rest oder mit einem Halogen, vorzugsweise Chlor substituiert sein kann, steht.

Die Struktureinheit II leitet sich von einem Glycidylether der allgemeinen Formel (Y) 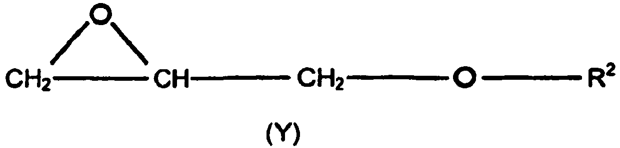 ab, worin der Rest
R² für eine Schutzgruppe für die OH-Gruppe, vorzugsweise für einen t-Butyl- und/oder einen Ethoxy-ethyl-Rest steht.

Nach der Polymerisation können die mit den Resten R² geschützten OH-Gruppen in die vorstehend aufgeführten funktionellen Gruppen teilweise bis vollständig umgewandelt werden.

Die Struktureinheit III leitet sich vorzugsweise von einem Alkylenoxid, besonders bevorzugt von einem linearen, verzweigten oder cyclischen Alkylenoxid mit 2 bis 10 C-Atomen, ganz besonders bevorzugt von Ethylenoxid, 1,2-Propylenoxid und/oder 1,2-Butylenoxid ab.

Die Struktureinheit IV, die bei verzweigten Glycidylether-Copolymeren vorhanden ist, leitet sich bevorzugt von Oxiranverbindungen der allgemeinen Formel (Z) 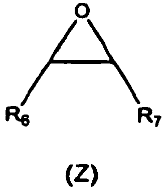 ab, worin
R⁶ für Wasserstoff oder eine Alkylgruppe mit 1 bis 4 C-Atomen, vorzugsweise Methyl, und
R⁷ für einen C1 bis C6 Alkylenrest mit mindestens einer Hydroxylgruppe, vorzugsweise einer endständigen Hydroxylgruppe steht.

Besonders bevorzugt wird 2,3-Ethoxypropanol-1(Glycidol) für eine Verzweigung der Glycidylether-Copolymere eingesetzt.

Sofern in der Struktureinheit V R² für H steht, leitet sich die Struktureinheit V von Gylcidol ab. Sie kann durch weitere Umsetzung der -OH funktionellen Gruppe, wie nachstehend ausgeführt, teilweise oder vollständig modifiziert werden.

Sofern in der Struktureinheit II R² für H steht, kann sie sich auch von Gylcidol ableiten und kann durch weitere Umsetzung der -OH Gruppe, wie nachstehend ausgeführt, teilweise oder vollständig modifiziert werden.

Die Endgruppen-OR⁴ leiten sich von den Starterverbindungen für die erfindungsgemäß zum Einsatz kommenden Glycidyl Copolymeren ab, wobei R⁴ für einen linearen, verzweigten oder cyclischen Alkylrest mit C1 bis C10, vorzugsweise einen C1 bis C5 Rest, der mit wenigstens einem, vorzugsweise endständigen Arylrest, besonders bevorzugt mit einem Phenylrest oder einen vorzugsweise endständigen Arylalkylenrest, besonders bevorzugt mit einem Benzylrest, der substituiert sein kann, oder einen Alkoxypolyalkyenoxidrest, der vorzugsweise aus wenigstens 2, bevorzugt aus 2 bis 20, besonders bevorzugt aus 2 bis 12 wiederkehrenden Einheiten eines Alkylenoxids, vorzugsweise eines Ethylenoxids und/oder Propylenoxids steht.

Die Endgruppe R⁵, gleich oder verschieden von R², hat die Bedeutung von R², mit Ausnahme einer OH-Schutzgruppe, und kann für H, für eine Carboxymethylengruppe oder eine entsprechenden C1 bis C6 Alkylestergruppe, für einen Monoesterrest der Maleinsäure oder Bernsteinsäure oder ein entsprechendes Monosalz, für einen Phosphorsäurerest oder ein entsprechendes Salz, für einen Sulfonsäurerest oder ein entsprechendes Salz, für einen Sulfosuccinsäurerest oder ein entsprechendes Salz stehen.

Die erfindungsgemäß zum Einsatz kommenden Glycidylether-Copolymere weisen vorzugsweise keine Estergruppierungen mit Ausnahme der ggfs. vorhandenen Maleinsäuremonoesterreste auf.

Die erfindungsgemäß zum Einsatz kommenden Glycidylether Blockcopolymere werden vorzugsweise durch Polymerisation unter Ringöffnung, ganz besonders bevorzugt durch anionische Polymerisation unter Ringöffnung erhalten. Die anionische Polymerisation erfolgt nach üblichen, dem Fachmann bekannten Verfahren. Geeignete Verfahrensparameter, Katalysatoren und Reaktionsmedien sind u. a. in der folgenden Veröffentlichung und in den dort aufgeführten Zitaten zu finden:
Nonionic Surfactants: Organic Chemistry, Surfactant Science Series Volume 72 (Edited by Nico M. Van Os).

Die Verfahrensbeschreibung gem. der zitierten Veröffentlichung wird hiermit als Beschreibung der anionischen Polymerisation unter Ringöffnung aufgenommen und gilt als Teil der Offenbarung der vorliegenden Anmeldung.

In den nachfolgenden Beispielen wird die prinzipielle Herstellung der erfindungsgemäß zum Einsatz kommenden Glycidylether-Copolymere und deren anschließende Modifizierung in 3 Verfahrensschritten durch entsprechende Verfahrensschemata erläutert.

Sowohl bei der Herstellung der hydrophoben Struktureinheiten I als auch bei den mehr oder weniger hydrophilen Struktureinheiten II bis V kann ein Glycidylether, ein Alkylenoxid oder eine Oxiranverbindung zur Herstellung der jeweiligen Struktureinheit oder deren Mischung eingesetzt werden.

Je nach Aufbau der erfindungsgemäß zum Einsatz kommenden Glycidylether-Copolymeren kann das Startermolekül zunächst mit einer zu hydrophilen Struktureinheiten führenden Ausgangsverbindung, vorzugsweise einem entsprechenden Glycidylether, oder mit einer zu einer hydrophoben Struktureinheit führenden Glycidylether, vorzugsweise einen Arylglycidylether polymerisiert werden.

Je nach Zugabe der unter Ringöffnung anionisch zu polymerisierenden Ausgangsverbindungen kann ein gradientenartiges Copolymeres oder vorzugsweise ein blockartig aufgebautes Glycidylether-Copolymeres erhalten werden. Die so erhaltenen Glycidylether-Copolymere können wenigstens einen hydrophilen und wenigstens einen hydrophoben Block oder eine darüber hinausgehende, abwechselnde Blockanordnung zwischen hydrophoben und hydrophilen Blöcken aufweisen.

Vorzugsweise wird die Polymerisation so durchgeführt, dass die Hydroxygruppen der Startverbindung teilweise durch Alkalimetallhydroxide oder -alkoxide von 0.1% bis 80%, vorzugsweise von 2 % bis 20% deprotoniert werden. Nach Entfernung des Wassers oder Alkohols durch Destillation wird eine Mischung aus Starter und Starter-Alkoholat erhalten. Üblicherweise wird die Polymerisation unter Ringöffnung in Gegenwart eines Katalysators ohne Zusatz eines Lösungsmittels durchgeführt. Die Polymerisation kann jedoch auch unter Mitverwendung eines unter den Alkoxilierungsbedingungen inerten Lösungsmittels durchgeführt werden.

Zu der Mischung werden vorzugsweise nach und nach die zu polymerisierenden Glycidylether gegeben und bei einer Temperatur zwischen 40°C und 120°C, vorzugsweise 50°C und 100°C, besonders bevorzugt 60°C und 90°C polymerisiert. Die lebende, anionische Polymerisation unter Ringöffnung wird durch den schnellen Austausch der Protonen zwischen den Alkohol- und Alkoholat-Gruppen der wachsenden Ketten kontrolliert. Am Ende der Polymerisation wird mit Säure neutralisiert und die dabei entstehenden Produkte abfiltriert. Dies kann auch mit Hilfe von sauren lonenaustauschem erzielt werden.

Verzweigte Strukturen können durch Polymerisation von Glycidol oder Copolymerisation von Glycidol mit den genannten Glycidylethem und/oder den genannten Alkyleneoxiden erhalten werden. Weitere Details zu Reaktionen, Reaktanten und Verfahrensweisen sind in folgenden Veröffentlichungen: Macromolecules 1999, 32, 4240-4246 oder US 2003/0120022 zu finden.

Die entsprechenden Offenbarungen in der Veröffentlichung werden hiermit aufgenommen und gelten als Teil der Offenbarung der vorliegenden Anmeldung.

Sofern bei der anionischen Polymerisation unter Ringöffnung auch verzweigte Struktureinheiten mit polymerisiert werden sollen, wird vorzugsweise die anionische Polymerisation mit Hilfe eines Startermolekühls mit endständiger Hydroxylgruppe vorzugsweise unter Polymerisation von hydrophoben Glyidylethem zur Bildung eines entsprechenden hydrophoben Blocks, begonnen.

Die erfindungsgemäß zum Einsatz kommenden Glycidylether-Copolymere weisen vorzugsweise 1 bis 50 %, besonders 1 bis 30 % und ganz besonders bevorzugt 1 bis 10 %, bezogen auf die hydrophoben Struktureinheiten, verzweigte Struktureinheiten IV auf.

Sofern einer oder der hydrophile Block des erfindungsgemäß zum Einsatz kommenden Glycidyletherpolymeren aus den Struktureinheiten III aufgebaut ist, kann die Polymerisation der Alkylenoxide nach bekannten Verfahren durchgeführt werden. Hinweise auf und Beschreibungen von geeigneten Reaktionsbedingungen für übliche, dem Fachmann bekannte Verfahren und geeigneten Apparaturen für ein Arbeiten unter Druck finden sich beispielsweise bei Nikolaus Schönfeldt, Grenzflächenaktive Äthylenoxid-Addukte, Wissenschaftliche Verlagsgesellschaft mbH, Stuttgart 1984 und in den dort aufgeführten Zitaten.

Die erfindungsgemäß zum Einsatz kommenden Glycidylether-Copolymere werden vorzugsweise nach der Polymerisation unter Ringöffnung noch nachbehandelt um z. B. die Ethergruppierung der sich von vorzugsweise hydrophilen Glycidylether ableitenden Struktureinheiten abzuspalten und funktionelle Hydroxylgruppen für weitere Reaktionen zu erhalten. Entsprechende Schutzgruppen, die während der anionischen Polymerisation unter Ringöffnung stabil bleiben, sind z.B. Ethoxyethylgruppen von Ethoxyethylglycidylether. Dies gilt auch für die t-Butylgruppen von t-Butylglycidylether, die zur Herstellung von hydrophilen Struktureinheiten II verwendet werden können. Ganz besonders bevorzugt weisen die Struktureinheiten II die leicht entfernbare Acetalgruppen als Schutzgruppen auf, sofern als Ausgangsverbindung ein Ethoxyethylglycidylether eingesetzt wird.

Als Schutzgruppe kann der zum Einsatz kommende Glycidylether auch eine Allylgruppe aufweisen, so dass ein Allylglycidylether zur Herstellung der Struktureinheiten II verwendet werden kann. Aus dem Stande der Technik (Makromolekül 2007, 40, 3070-3079) ist die Entfernung von Schutzgruppen, insbesondere die dafür not-wendigen Reaktionsbedingungen und Reaktionspartrier, zu entnehmen.

Nach der Entfernung der Schutzgruppen erhält man ein Copolymeres, vorzugsweise ein Blockcopolymeres, dass neben den Struktureinheiten 1, Struktureinheiten mit freien Hydroxylgruppen aufweist als Zwischenprodukt.

Dieses Zwischenprodukt kann über die freien Hydroxylgruppen noch weiter funktionalisiert werden, um z. B. anionische Gruppen einzuführen.

So kann durch Reaktion mit Polyphosphorsäure eine Phosphorylierung der Hydroxylgruppen erfolgen, ebenso wie die Einführung von Sulfosäuregruppen mit Hilfe von konzentrieter Schwefelsäure. Oleum, Schwefeltrioxid oder Chlorsulfonsäure erfolgen kann. Durch Reaktion von Maleinsäureanhydrid und anschließender Sulfonierung mit Natriumsulfid nach bekannten Methoden kann ein Sulfosuccinsäurerest über die Reaktion mit den freien Hydroxylgruppen des Glycidylcopolymeren eingeführt werden. Die Einführung einer Carboxymethylengruppe kann mit Hilfe von Natriumhydrid und Natriumchloracetat erfolgen. Weitere Methoden zur Einführung einer Carboxylgruppe über eine Alkylenbrücke können durch Addition eines tert.-Butylacrylat oder Acrylnitril mit anschließender Hydrolyse erfolgen. Weiterhin ist es möglich, durch Reaktion der freien Hydroxylgruppen des Zwischenproduktes mit cyclischen Dicarbonsäure-Anhydriden wie Maleinsäureanhydrid oder Bernsteinsäureanhydrid über eine Esterbindung auch Carboxylgruppen einzuführen. Andere Methode für die Einführung von Suffosäureresten, Phosphorsäureresten oder Carboxymethylengruppen sind z.B. in Journal of Polymer Science: Part A: Polymer Chemistry 2001, 39, 955-963 beschrieben.

Sofern notwendig und um ausreichend funktionierende Haftgruppen für die zu dispergierenden Pigmente zu erzielen, können die vorstehend beschriebenen, unterschiedlichen Säuregruppen auch in entsprechende Salze durch Reaktion mit einer Base umgewandelt werden.

Geeignete Salze sind Ammoniumsalze, hergestellt durch Reaktion mit Ammonium oder einem geeigneten organischen Amin, tert.-Aminen, vorzugsweise Triethylamin, Alkanolamine, wie z. B. Triethanolamin, Ammoniumhydroxid oder Tetraalkylammoniumhydroxid. Weiterhin eignen sich zur Umsetzung mit den Säuregruppen Alkalihydroxide, wie z. B. Lithiumhydroxid, Natriumhydroxid, Kaliumhydroxid oder entsprechende Carbonate wie z. B. Kaliumcarbonat oder Dicarbonate wie Kaliumdicarbonat.

Die erfindungsgemäßen Zusammensetzungen enthalten die vorstehend definierten Copolymere, vorzugsweise modifizierte Copolymere, als Dispergiermittel für Feststoffe, vorzugsweise für Pigmente, mit Ausnahme von Silberhalogeniden. Bei diesen Zusammensetzungen handelt es sich um wässrige oder lösungsmittelhaltige Systeme mit dispergierten Feststoffen, vorzugsweise dispergierten Pigmenten.

Diese erfindungsgemäßen Zusammensetzungen eignen sich für zahlreiche Anwendungen.

So werden für die Herstellung von Universaltönpasten, Pigmentoberflächenmodifizierungen, Color Resists für Farbfilter oder pigmenthaltige Zusammensetzungen, vorzugsweise Pigmentdispersionen gefordert, die in unterschiedlichen flüssigen Medien wie in organischen Lösungsmitteln oder in Wasser stabile Dispersionen ergeben und dementsprechend auch weiter in wässrigen Medien oder in lösungsmittelhaltigen Medien zur weiteren Formulierung eingearbeitet werden können. So wird z. B. von einem Color Resist während seiner Verarbeitung gefordert, dass er in einem organischen Lösungsmittel wie Methoxypropylacetat gut löslich ist und sich in einer alkalischen, wässrigen Lösung, die Tenside enthalten kann, schnell löst. Die entsprechend zum Einsatz kommende erfindungsgemäße Zusammensetzung hat dabei direkten Einfluss auf die Eigenschaften des Endprodukts.

Dies gilt auch für die Herstellung von pigmentierten Lacken, für deren Verarbeitung trotz hoher Pigmentbeladung eine niedrige Viskosität gefordert wird. Die erfindungsgemäßen Zusammensetzungen erfüllen diese und darüber hinaus gehende Anforderungen, so dass sie für eine Vielzahl von Anwendungen problemlos und mit verbesserten Eigenschaften eingesetzt werden können.

So können die Zusammensetzungen z. B. bei der Herstellung oder Verarbeitung von Lacken, Druckfarben, Papierstrich, Leder- und Textilfarben, Pasten, Pigmentkonzentraten. Keramiken oder kosmetischen Zubereitungen eingesetzt werden, wenn diese als Feststoffe Pigmente und/oder Füllstoffe enthalten. Auch bei der Herstellung oder Verarbeitung von Gieß- und/oder Formmassen auf Basis von synthetischen, halbsynthetischen oder natürlichen makromotekularen Stoffen, wie zum Beispiel polyvinylchlorid, gesättigten oder ungesättigten Polyestern, Polyurethanen, Polystyrol, Polyacrylat, Polyamid, Epoxidharzen, Polyolefinen wie Polymethylen oder Polypropylen können sie eingesetzt werden. Beispielsweise lassen sich die erfindungsgemäßen Zusammensetzungen, die dispergierte Pigmente, Füllstoffe und ggfs. andere Additive enthalten, in Gießmassen, PVC-Plastisolen, Gelcoats, Polymerbeton, Leiterplatten, Industrielacken, Holz- und Möbeilacken, Fahrzeuglacken, Schiffsfarben, Korrosionsschutzfarben, Can- und Coil-Coatings, Maler- und Bautenlacken ggfs nach Zugabe von Bindemittel sehr gut verteilen.

Beispiele für übliche Bindemittel sind Harze auf Basis von Polyurethanen, Cellulosenitrat, Celluloseacetobutyrat, Alkyd, Melamin, Polyester, Chlorkautschuk, Epoxid und Acrylat.

Beispiele für Beschichtungen auf Wasserbasis sind kathodische oder anodische Elektrotauchlackierungen zum Beispiel für Automobilkarossen. Weitere Beispiele sind Putze, Silikatfarben, Dispersionstarben, Wasserlacke auf Basis von wasserverdünnbaren Alkyden, Alkydemulsionen, Hybridsystemen, 2-Komponenten-Systemen, Polyurethan- und Acrylat-Dispersionen.

Die erfindungsgemäßen Zusammensetzungen eignen sich insbesondere auch als Grundlage für Feststoffkonzentrate, wie zum Beispiel Pigmentkonzentrate. Dazu werden die vorstehend beschriebenen Copolymere in einem Dispergiermedium wie organischen Lösemitteln, Weichmachern und/oder Wasser vorgelegt und die zu dispergierenden Feststoffe, vorzugsweise Pigmente unter Rühren zugegeben. Zusätzlich können diesen Zusammensetzungen Bindemittel und/oder andere Hilfsstoffe hinzugeführt werden, Vorzugsweise gewährleisten aber bindemittelfreie Zusammensetzungen bereits stabile Pigmentkonzentrate.

Ebenso ist es möglich, die erfindungsgemäßen Zusammensetzungen als fließfähige Feststoffkonzentrate einzusetzen. Dazu werden Pigmentpresskuchen, die noch organische Lösemittel, Weichmacher und/oder Wasser enthalten können, mit dem Glycidylether-Copolymeren gemischt und die so erhaltene Mischung dispergiert. Die auf verschiedenen Wegen hergestellten erfindungegemäßen Feststoffkonzentrate können dann in unterschiedliche Substrate wie z. B. Alkydharze, Polyesterharze, Acrylatharze, Polyurethanharze oder Epoxidharze eingearbeitet werden. Pigmente können aber auch wasser- bzw. lösemittelfrei direkt mit den Glycidylether-Copolymeren dispergiert werden. Diese erfindungsgemäßen Zusammensetzungen eignen sich dann besonders zur Pigmentierung von thermoplastischen und duroplastischen Kunststoffformulienrungen.

Die erfindungsgemäßen Zusammensetzungen können vorteilhaft auch bei der Herstellung von Tinten für "non impact" -Druckverfahren wie "thermal inkjet" und dem "Bubblejet-Verfahren" verwendet werden. Diese Tinten können beispielsweise wässrige Tintenformulierungen, lösemittelbasierte Tintenformulierungen, lösemittelfreie oder -arme Tinten für UV-Applikationen als auch wachsartige Tinten sein.

Die erfindungsgemäßen Zusammensetzungen können auch bei der Herstellung von Farbfiltern für Flüssigkristall-Anzeigen, -bildschirme, Farbauflösungsgeräte, Sensoren, Plasmabildschirme, Anzeigen auf Basis der SED (Surface-conduction Electron-emitter Display) und für MLCC (Multi Layer Ceramic Compounds) verwendet werden. Hierbei kann der flüssige Farbfilterlack, der auch Color Resist genannt wird, durch verschiedenste Applikationsverfahren wie Spin Coating, Aufrakeln, Kombination beider oder über "non impact"-Druckverfahren wie zum Beispiel Inkjet-Verfahren aufgetragen werden. Die MLCC-Technologie wird bei der Herstellung von Mikrochips und Leiterplatten verwendet.

Die erfindungsgemäßen Zusammensetzungen können auch in kosmetischen Zubereitungen wie zum Beispiel Make-up, Puder, Lippenstifte, Haarfärbemittel, Cremes, Nagellacke und Sonnenschutzpräparate verwendet werden.

Diese können in den üblichen Formen vorliegen. Die erfindungsgemäßen Zubereitungen enthaltend die vorstehend definierten Copolymere als Dispergiermittel für Pigmente wie Titandioxid oder Eisenoxid können in die in der Kosmetik üblichen Trägermedien, wie zum Beispiel in Wasser, Ricinusöle oder in Silikonöle eingearbeitet werden.

Ein weiterer Gegenstand der vorliegenden Erfindung ist daher auch die Verwendung eines Glycidylether-Copolymeren als Dispergiermittel für Feststoffe, bevorzugt für Pigmente, oder als Phasenvermittler. Diese erfindungsgemäßen Pigmentdispersionen enthaltend erfindungsgemäße Zusammensetzungen können zur Herstellung eines pigmentierten Überzugs auf einem Substrat eingesetzt werden, wobei der Pigmentlack auf das Substrat aufgebracht und dort eingebrannt oder ausgehärtet bzw. vernetzt wird.

Ein weitere Gegenstand der vorliegenden Erfindung sind daher Überzugszusammensetzungen enthaltend die erfindungsgemäßen Zusammensetzungen bzw. daraus hergestellte Überzüge.

Aus den erfindungsgemäßen Pigmentdispersionen können auch erfindungsgemäße Pigmentpasten basierend darauf hergestellt werden.

Die erfindungsgemäßen Zusammensetzungen können alleine oder zusammen mit üblichen Bindemitteln eingesetzt werden. Beim Einsatz in Polyolefinen kann es z. B. vorteilhaft sein entsprechende niedermolekulare Polyolefine als Trägermaterialien den erfindungsgemäßen Zusammensetzungen zuzusetzen.

Eine erfindungsgemäße Zusammensetzung betrifft auch Pulverpartikel- und/oder faserpartikelförmiger Feststoffe, insbesondere von Pigmenten oder Kunststofffüllstoffen, die mit den Glycidylether-Copolymeren beschichtet sind. Diese Beschichtung von organischen oder anorganischen Feststoffen kann in bekannter Weise ausgeführt werden, wie sie z. B. in EP-A-0 270 126 beschrieben werden. Aus den so erhaltenen erfindungsgemäßen Zusammensetzungen kann das Dispergiermedium entweder entfernt oder unter Bildung von Pasten verbleiben.

Bei Pigmenten kann diese Beschichtung der Pigmentoberfläche während oder nach der Synthese der Pigmente erfolgen, z. B. durch Zusatz derGlycidylether-Copolymere zur Pigmentsuspension oder während oder nach dem Pigmentfinish.

Die auf diese Weise erhaltenen erfindungsgemäßen Zusammensetzungen eignen sich als vorbehandelte Pigmente sehr gut zum Einarbeiten und zeichnen sich durch ein verbessertes Viskositäts-, Flockulations- und Glanzverhalten und durch höhere Farbstärke gegenüber nicht behandelten Pigmenten aus.

Beispiele für Pigmente sind Mono-, Di-, Tri- und Polyazopigmente, Oxazin-, Dioxazin-, Thiazin-Pigmente, Diketo-pyrrolo-pyrrole, Phthalocyanine, Ultramarin und andere Metallkomplex-Pigmente, indigoide Pigmente, Diphenylmethan-, Triarylmethan, Xanthen-, Acridin-, Chinacridon-, Methin-Pigmente, Anthrachinon, Pyranthron-, Perylen- und andere polycyclische Carbonyl-Pigmente. Weitere Beispiele für organische Pigmente finden sich in der Monographie: W. Herbst, K. Hunger "Industrial Organic Pigments". 1997 (Verlag: Wiley-VCH, ISBN: 3-527-28836-8). Beispiele für anorganische Pigmente sind Pigmente auf Basis von Ruß, Graphit, Zink, Titandioxid, Zinkoxid, Zinksulfid, Zinkphosphat, Bariumsulfat, Lithophone, Eisenoxid, Ultramarin, Manganphosphat, Cobaltaluminat, Cobaltstannat, Cobaltzinkat, Antimonoxid, Antimonsulfid, Chromoxid, Zinkchromat, gemischten Metalloxiden auf Basis von Nickel, Bismut, Vanadium, Molybdän, Cadmium, Titan, Zink, Mangan, Cobalt, Eisen, Chrom, Antimon, Magnesium, Aluminium (beispielsweise Nickeltitangelb, Bismut-vanadat-molybdatgelb oder Chromtitangelb), vorzugsweise mit Ausnahme von Silberhalogeniden. Weitere Beispiele sind in der Monographie: G. Buxbaum "Industrial Inorganic Pigments", 1998 (Verlag: Wiley-VCH, ISBN: 3-527-28878-3) genannt. Anorganische Pigmente können auch magnetische Pigmente auf Basis von Reineisen, Eisenoxiden und Chromoxiden oder Mischoxyden, Metalleffektpigmente aus Aluminium, Zink, Kupfer oder Messing sowie Perlglanzpigmente, fluoreszierende und phosphoreszierende Leuchtpigmente sein.

Weitere Beispiele sind nanoskalige organische oder anorganische Feststoffe mit Teilchengrößen unterhalb von 100 nm, wie bestimmte Rußtypen oder Partikel, die aus einem Metall-, oder Halbmetalloxid bzw. -hydroxid bestehen, sowie Partikel, die aus gemischten Metall- und/oder Halbmetalloxiden bzw. -hydroxiden bestehen.

Beispielsweise lassen sich die Oxide und/oder Oxidhydroxide des Aluminiums, Siliziums, Zinks, Titans, usw. zur Herstellung solcher extrem feinteiligen Feststoffe heranziehen. Der Herstellprozess dieser oxidischen bzw. hydroxidischen bzw. oxidhydroxidischen Teilchen kann über die unterschiedlichsten Verfahren wie beispielsweise Ionenaustauschprozesse, Plasmaprozesse, Sol-Gel-Verfahren, Ausfällung, Zerkleinerung (z. B. durch Vermahlung) oder Flammhydrolyse usw. erfolgen. Bei diesen nanoskaligen Feststoffen kann es sich auch um sog. Hybrid-Partikel handeln, die aus einem anorganischen Kern und einer organischen Hülle - oder umgekehrt - bestehen.

Beispiele für pulver- oder faserförmige Füllstoffe sind zum Beispiel solche, die aufgebaut sind aus pulver- oder faserförmigen Teilchen von Aluminiumoxid, Aluminiumhydroxid, Siliziumdioxid, Kieselgur, Kieselerde, Quarz, Kieselgel, Talkum, Kaolin, Glimmer, Perlite, Feldspat, Schiefermehl, Calciumsulfat, Bariumsulfat, Calciumcarbonat, Calcit, Dolomit, Glas oder Kohlenstoff. Weitere Beispiele für Pigmente oder Füllstoffe finden sich beispielsweise in der EP-A-0 270 126. Auch Flammschutzmittel wie z. B. Aluminium- oder Magnesiumhydroxid und Mattierungsmittel wie z. B. Kieselsäuren lassen sich ebenfalls hervorragend dispergieren und stabilisieren.

Weiterer Gegenstand der vorliegenden Erfindung sind Lacke, Pasten und Formmassen enthaltend die erfindungsgemäßen Zubereitungen umfassend Glycidylether-Copolymere und ein oder mehrere dispergierte Pigmente, organische Lösemittel und/oder Wasser, sowie gegebenenfalls Bindemittel und lackübliche Hilfsstoffe.

Dazu werden von 0,10 bis 500 Gew.%, vorzugsweise 0,5 bis 300 Gew.%, besonders bevorzugt 1 bis 200 Gew.% des Glycidylether-Copolymeren, bezogen auf den Feststoffgehalt, vorzugsweise dem Pigmentgehalt, eingesetzt.

Die erfindungsgemäßen Zusammensetzungen als Wasser in Öl Emulsionen können die vorstehend beschriebenen Glycidylether-Copolymere vorzugsweise Glycidylether Blockcopolymere als Emulgator enthalten. Da üblicherweise Emulsionen instabile Systeme sind, die sich nicht spontan bilden, sondern erst durch Schütteln, Rühren, Homogenisierung oder Sprühprozessen eine Verteilung der Phasen ineinander erhalten werden, werden um diese instabilen Strukturen zu stabilisieren, werden üblicherweise Emulgatoren eingesetzt.

Trotz des Einsatzes von Emulgatoren besteht bei üblichen Emulgatoren nach wie vor die Gefahr, dass eine Separierung der Phasen erfolgt, indem die verteilten Wassertröpfchen sich in eine kohärente Phase von der Ölphase separieren. Solche schwer zu stabilisierenden Wasser in Öl Emulsionen sind u. a. sog. Wasser verlängerte Polyesterharze, bei denen Wassertropfen in der Polyesterphase emulgiert sind.

Dabei fungiert Wasser als kostengünstiger Füllstoff zur Reduzierung der Produktionskosten. Außerdem kann mit Hilfe des Wassers Reaktionswärme aufgenommen werden. Diese kontinuierliche Phase umfasst ungesättigte Polyester und α, β ungesättigte Monomere wie Styrol. Die Emulsion bzw. der ungesättigte Polyester wird mit Hilfe von Radikalstartern und Übergangsmetall-Katalysatoren mit Hilfe des α, β ungesättigten Monomeren ausgehärtet. Üblicherweise sind die Wasser verlängerten Polyesteremulsionen selbst unter Zugabe von verschiedenen Basen nur für wenige Stunden stabil, wie sie z. B. in Journal of Elastomers and Plastics 1997, 29, 13-33; Acta Polymerica 1987, 38, 226-229; Journal of Elastomers & Plastics 1986, 18, 62-70; US 3,779,966; US 3,692,724 beschrieben sind.

Vorzugsweise weisen die erfindungsgemäßen Emulsionen 0,10, bevorzugt 0,25, ganz besonders bevorzugt 0,5 bis zu 10, besonders bevorzugt bis zu 5 und ganz besonders bevorzugt bis zu 2 Gew.% des Glycidylether-Copolymeren, bezogen auf das Gesamtgewicht der Emulsion, auf.

Überaschenderweise gelingt es mit den erfindungsgemäß zum Einsatz kommenden Glycidylether-Copolymeren als Emulgatoren zusammen mit Wasser und einer Mischung von ungesättigten Polyesterharzen und Styrol eine Wasser-in-Öl Emulsion über Monate stabil zu halten.

Zur Herstellung dieser erfindungsgemäßen Zusammensetzung wird vorzugsweise ein Glycidylether-(block)copolymer zusammen mit Wasser ohne Schwierigkeiten in die Polyesterformulierung eingearbeitet, wobei ein Styrol-hattiger, mit Wasser verlängerter Polyester mit einem Glycidylether-(block)copolymeren als Emulgator als Wasser-in Öl Emulsion erhalten wird. Eine entsprechende Zusammensetzung in Form einer Wasser-in-Öl Emulsion ist ein weiterer Gegenstand der vorliegenden Erfindung.

### Beispiele

Zur Charakterisierung der Copolymere wurden folgende Messmethoden eingesetzt:

### Gelpermeationschromatographie (GPC)

Die Chromatographie wurde bei 40 °C unter Verwendung einer Hochdruckflüssigkeitschromatographiepumpe (Bishoff HPLC 2200) unter einem refraktiven Indexdetektor (Waters 410) durchgeführt.

Das Laufmittel war Tetrahydrofuran mit einer Fließgeschwindigkeit von 1 mm/min. Mit Hilfe von Polystyrolstandards wurde eine konventionelle Kalibrierung erzielt. Das Zahlenmittel des Molekulargewichts Mn, das Gewichtsmittel des Molekulargewichts Mw und die Polydispersität Q = Mw/Mn, wurde gem. dem Programm NTeqGPC berechnet.

### NMR-Messung

Die NMR-Messungen wurden auf einem Bruker DPX 300 bei 300 MHz (¹H) bzw. 75 MHz (¹³C) durchgeführt. Als Lösungsmitel wurde deuteriertes Chloroform (CDCl₃) und deuteriertes Dimethylsulfoxid (DMSO-*d*₆) verwendet.

### Beispiele 1 bis 3

Die in der nachstehenden Liste mit Strukturformel dargestellten Glycidylether Blockcopolymere wurden synthetisiert.

| Beispiel | Struktur des Blockcopolymeren |
|---|---|
| BEISPIEL 1 | 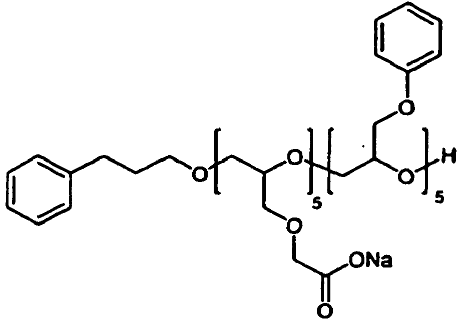 |
| BEISPIEL 2 | 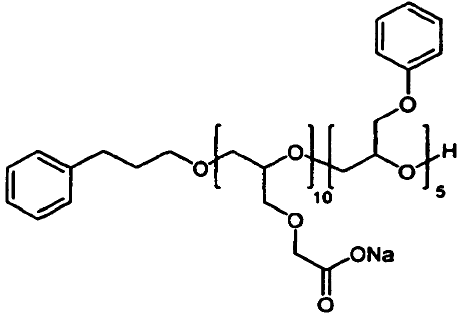 |
| BEISPIEL 3 | 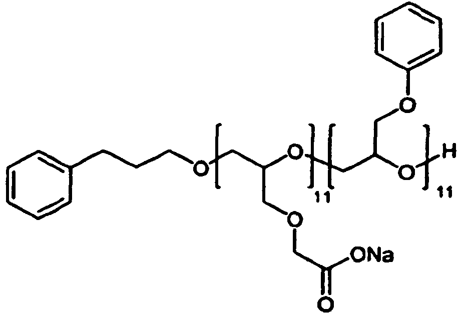 |

Die Block-Copolymeren der Beispiele 1 bis 3 wurden in 3 Verfahrensschritten, die nachfolgend beschrieben sind, hergestellt.

### 1. Verfahrensschritt

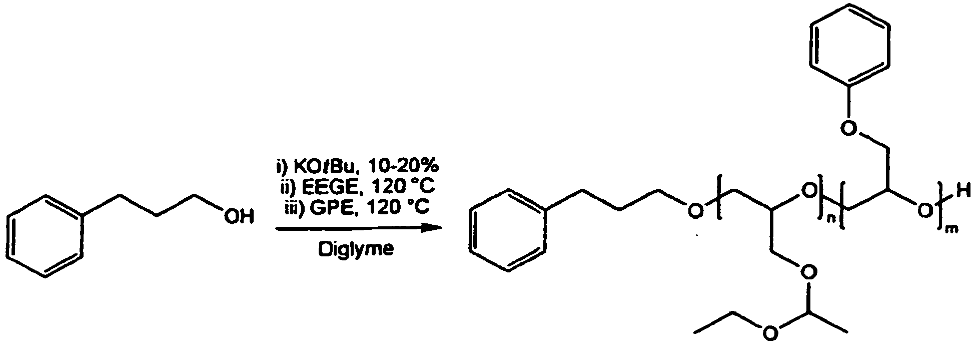

Entsprechend diesem Verfahrensschema wurde trockenes Diglyme [Bis-(2-Methoxyethyl)-ether] unter Stickstoff vorgelegt. Dazu wurde der Starter 3-Phenylpropan-1-ol (3-PP) gegeben und eine Lösung von Kalium-tert.-Butylat (KOtBu) in THF (1 mol/l) zugegeben. Die Lösung wurde ca. 20 min bei 40 °C gerührt und das dabei entstehende t-Butanol im Vakuum abgezogen. Das Monomere Ethoxyethylglycidylether (EEGE) wurde hinzugefügt und diese Lösung bei 100 °C 3 Stunden lang gehalten (komplette Umsetzung gem. ¹H NMR-Analyse). Daran anschließend wurde das Monomere Phenylglycidylether (PhGE) zugegeben und das Reaktionsgemisch für weitere 20 Stunden gerührt (komplette Umsetzung des Monomeren gem. ¹H NMR-Analyse). Das Lösungsmittel wurde destillativ mit Hilfe einer Ölvakuumpumpe bei einer Temperatur von 40 bis 80 °C entfernt, wobei man ein rotes Öl als Produkt erhielt.

Die Mengenangaben für diesen 1. Verfahrensschritt Polydispersität sowie die Molekulargewichte bzw. die Molekulargewichtsverteilung ist der nachfolgenden Tabelle 1 zu entnehmen.

**Tabelle 1**

| Produkt | Diglyme mL | 3-PP g (mmol) | KOtBu mmol | EEGE g (mmol) | PhGE (mmol) | *M̅ₙ̅* GPC (THF) | *M̅ₙ̅*/*M̅ₙ̅* GPC (THF) | m,n (1H-NMR) |
|---|---|---|---|---|---|---|---|---|
| BEISPIEL 1'' | 30 | 1.86 (13.7) | 1.37 | 11.64 (79.6) | 11.89 (79.2) | 1600 | 1.17 | 5,5 |
| BEISPIEL 2" | 20 | 1.36 (10.0) | 1.50 | 18.06 (123.5) | 9.35 (62.3) | 2400 | 1.15 | 5,10 |
| BEISPIEL 3" | 30 | 0.93 (6.8) | 0.68 | 10.76 (73.6) | 10.40 (69.3) | 2400 | 1.21 | 11,11 |

### 2. Verfahrensschritt

Gemäß dem nachfolgenden Reaktionsschema wird die Acetalschutzgruppe entfernt.

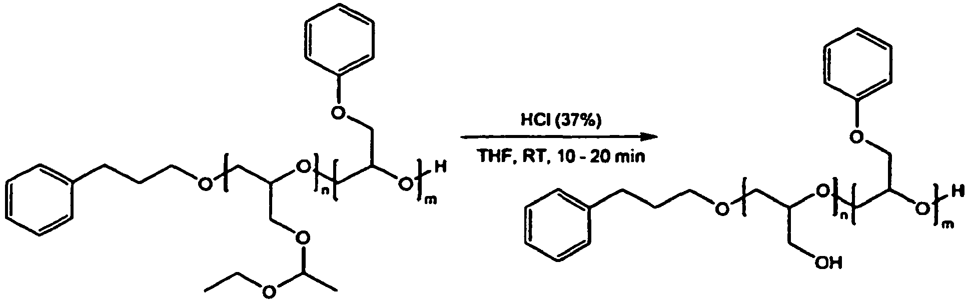

Um die Acetalschutzgruppe zu entfernen, wird das nach dem 1. Verfahrensschritt erhaltene Blockcopolymere in technischem THF gelöst und mit konzentrierter Salzsäurelösung (37 Gew.%ig) behandelt. Nach 20 min wird wasserfreies K₂CO₃ zugegeben und für weitere 5 min gerührt. Danach werden die festen Bestandteile abfiltriert und die Lösung im Vakuum abgedampft. Der ölige Rückstand wird mit Hilfe einer Ölvakuumpumpe bei 45 °C über Nacht zu einem dunklen Öl getrocknet.

In der nachfolgenden Tabelle 2 sind die Mengenangaben der Ausgangsverbindungen zur Behandlung der Blockcopolymere erhalten gemäß 1. Verfahrensschritt angegeben und die bei der Behandlung erzielten Ausbeuten und Molekulargewichte bzw. die Molekulargewichtsverteilung (Polydispersität) aufgeführt.

**Tabelle 2**

| Produkt | Blockcopolymere nach 1. Verfahrensschritt | Menge g (mmol Acetalgruppen) | m,n | TH F mL | HCl (37%) mL | *M̅ₙ̅* GPC (THF) | *M̅_̅{̅w̅}̅* /*M̅ₙ̅* GPC (THF) |
|---|---|---|---|---|---|---|---|
| BEISPIEL 1' | BEISPIEL 1 " | 19.62 (60.6) | 5,5 | 600 | 15 | 1200 | 1.10 |
| BEISPIEL 2' | BEISPIEL 2" | 22.77 (96.9) | 5,10 | 450 | 40 | 1100 | 1.15 |
| BEISPIEL 3' | BEISPIEL 3" | 21.99 (71.0) | 11,1 1 | 500 | 20 | 1400 | 1.19 |

### 3. Verfahrensschritt

Gemäß nachfolgendem Verfahrensschema wurde im 3. Verfahrensschritt das Blockcopolymere erhalten nach dem 2. Verfahrensschritt carboxymethyliert und anschließend die Carboxylgruppen versalzen.

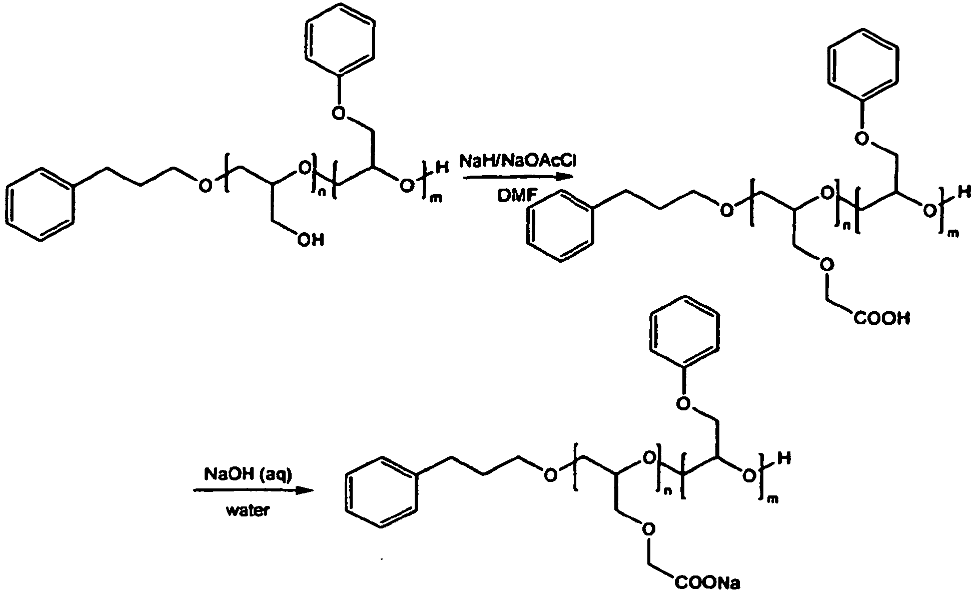

Die Reaktion wurde in einem trockenen 500 ml Kolben durchgeführt, in dem eine Natriumhydrid (NaH) Suspension (60 % in Mineralöl) eingefüllt und mit Pentan unter Stickstoffatmosphäre gewaschen wurde. Eine Lösung des im 2. Verfahrensschritt jeweils erhaltenen Blockcopolymeren in N,N-Dimethylformamid (DMF), wurde langsam (während 30 bis 35 min) in diese Dispersion unter Rühren eingegeben und das Rühren bei Zimmertemperatur 2½ Stunden fortgeführt. Anschließend wurde Natriumchloracetat (NaOAcCl) zugegeben. Die Reaktionsmischung wurde bei 60 °C 24 Stunden gerührt. Der Rückstand von NaH wurde durch Zugabe von festem Ammoniumchlorid neutralisiert. Das Lösungsmittel wurde unter vermindertern Druck entfernt und der Rückstand in Wasser gelöst. Das Polymer wurde unter Zugabe von wässriger HCl Lösung (5 Gew.%) ausgefällt und mit Wasser gewaschen. Nach dem Waschen wurden 30 ml Wasser zugegeben und der pH-Wert auf einen Wert von 7 bis 8 mit Hilfe einer wässrigen Natriumhydroxid-Lösung (12 mol/l) eingestellt. Die Lösung wurde dann durch Abdampfen auf ein Volumen von 60 ml eingeengt. Von dieser Lösung wurden zur Bestimmung der Konzentration des Polymeren Polymere entnommen. In der nachfolgenden Tabelle 3 sind die Mengen der Ausgangsverbindungen für den 3. Verfahrensschritt und die Konzentration der dadurch eingeführten Natriumchloracetatgruppen aufgeführt.

**Tabelle 3**

| Produkte | Blockcopolymere nach 2. Verfahrensschritt | Menge g (mmol OH-gruppen) | m,n | DM F mL | NaH (60 gew%, Mineral Öl) g (mmol) | NaOAcCl g (mmol) | Konzentration w% | pH |
|---|---|---|---|---|---|---|---|---|
| BEISPIEL 1 | BEISPIEL 1' | 14.40 (57.2) | 5,5 | 150 | 3.35 (83.5) | 7.49 (64.3) | 23.4 | 7.9 |
| BEISPIEL 2 | BEISPIEL 2' | 14.52 (89.2) | 5,10 | 190 | 5.35 (133.5) | 12.45 (106.9) | 26.2 | 7.5 |
| BEISPIEL 3 | BEISPIEL 3' | 16.64 (70.0) | 11,11 | 200 | 4.19 (104.6) | 10.23 (87.9) | 22.8 | 7.2 |

### Beispiele 4'/4 bis 9'/9

Die nachfolgend dargestellten Blockcopolymere wurden gem. den vorstehend erläuterten 1. bis 3. Verfahrensschritten hergestellt mit Ausnahme des Einsatzes von anderen Starterverbindungen und der Abfolge der Polymerisation der verschiedenen Monomeren. Die entsprechende Struktur der Blockcopolymeren ist wie folgt:

| Beispiel | m | n | Struktur der Blockcopolymeren |
|---|---|---|---|
| BEISPIEL 4' | 5 | 5 | 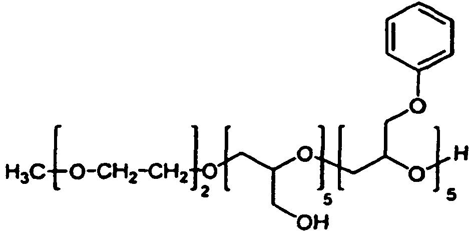 |
| BEISPIEL 4 | 5 | 5 | 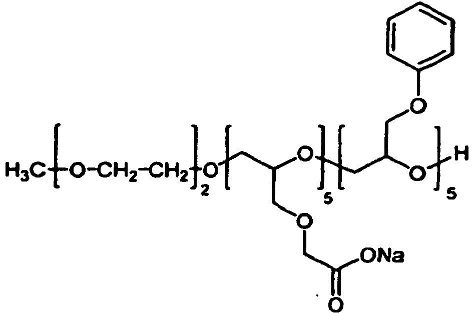 |
| BEISPIEL 5' | 5 | 10 | 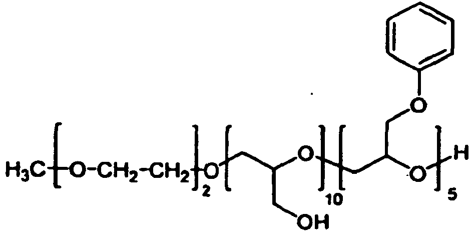 |
| BEISPIEL 5 | 5 | 10 | 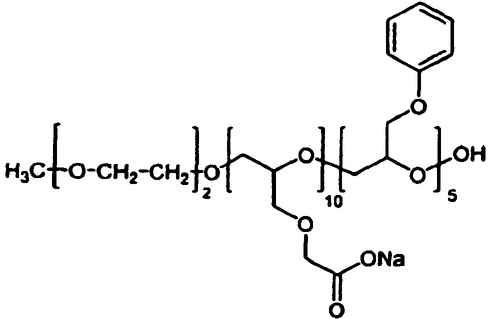 |
| BEISPIEL 6' | 10 | 10 | 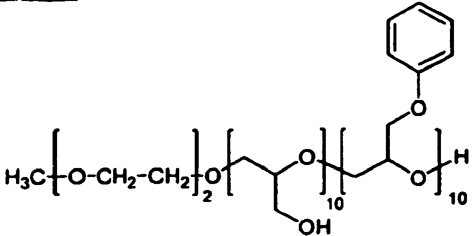 |
| BEISPIEL 6 | 10 | 10 | 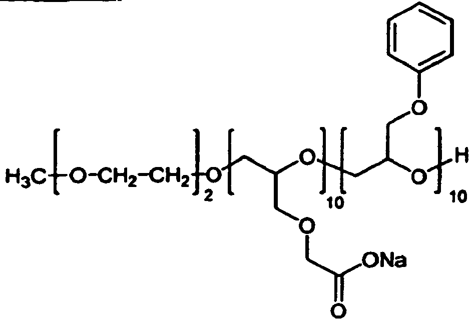 |
| BEISPIEL 7' | 4 | 5 | 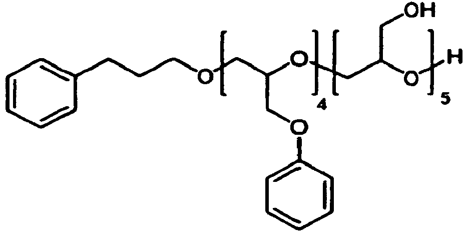 |
| BEISPIEL 7 | 4 | 5 | 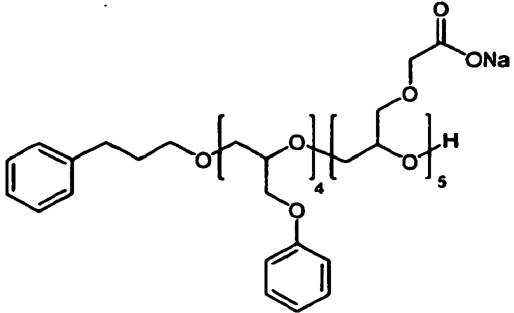 |
| BEISPIEL 8' | 4 | 10 | 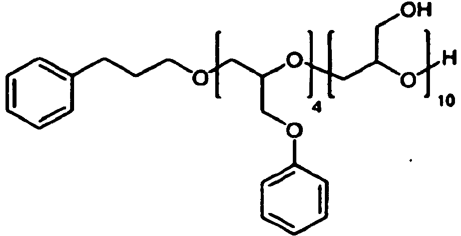 |
| BEISPIEL 8 | 4 | 10 | 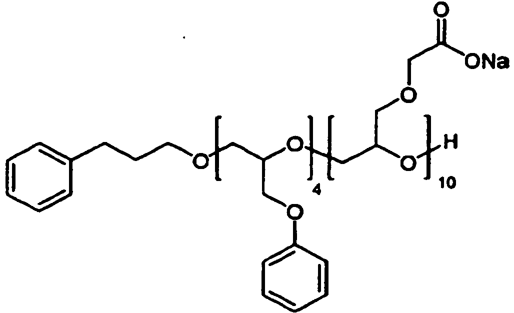 |
| BEISPIEL 9' | 9 | 10 | 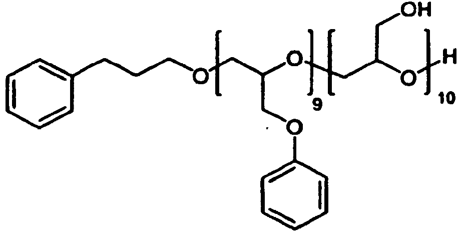 |
| BEISPIEL 9 | 9 | 10 | 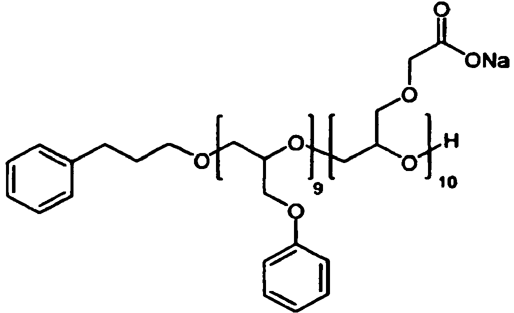 |

### Beispiele 10, 11 und Vergleichsbeispiel 12

| Beispiel | m | n | Struktur der Blockcopolymeren |
|---|---|---|---|
| BEISPIEL 10 | 3 | 10 | 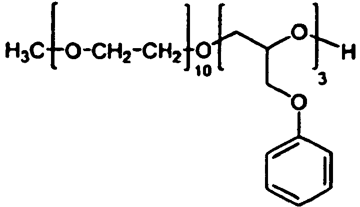 |
| BEISPIEL 11 | 3 | ~ 10 | 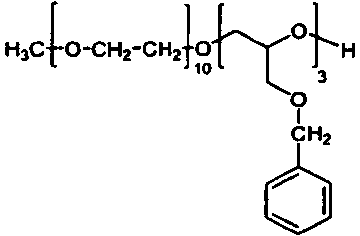 |
| Vergleichsbeispiel BEISPIEL 12 | 3 | ~ 10 | 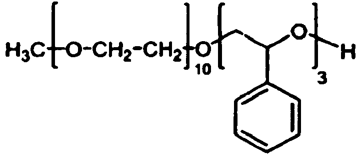 |

### Beispiel 10

Zur Herstellung des Dispergiermittels wurden in einem 250ml 4-Halskolben, ausgestattet mit Rührer, Kühler, Thermometer und Tropftrichter, 76,6 g (0,15 mol) MPEG 500 (Methanol gestarteter monohydroxyfunktionelle EO-Polyether, Mn 500 g/mol von Clariant) sowie 1,68 g (0,015 mol) Kalium-tert.-Butylat eingewogen. Unter N₂ und Rühren wurde auf 100°C aufgeheizt. Mit leichtem N₂-Strom wird bei 100°C entstehendes tert.-Butanol in einer Stunde entfernt.

Anschließend wurde die Temperatur auf 110°C erhöht und 67,68 g (0,45 mol) Phenylglycidylether innerhalb von 3 Std. zugetropft. Nach Ende der Zudosierung wurde weitere 5 Std bei 110°C gerührt. Das entstandene Copolymer wurde anschließend in Methanol gelöst und mit saurem Ionentauscher Amberlite IR-120H neutralisiert. Nach Abfiltration des Ionentauschers wurde Methanol im Vakuum entfernt.

### Beispiel 11

Das Dispergiermittel wurde in ähnlicher Weise synthetisiert wie BEISPIEL 10 mit Ausnahme, dass anstelle von Phenylglycidylethermonomer Benzylglycidylether eingesetzt wurde.

### Vergleichsbeispiel 12

Das Dispergiermittel (nicht erfindungsgemäß) wurde entsprechend der für BEISPIEL 10 angegebenen Herstellungsvorschrift synthetisiert mit Ausnahme, dass anstelle von Phenylglycidylethermonomer Styroloxid eingesetzt wurde.

In der nachfolgenden Tabelle 4 sind die nach der vorstehend angegebenen chromatographischen Methode Zahlengewichtsmittel des Molekulargewichts bzw. die Polydispersität des Blockcopolymere n gemäß Beispiel 10 und 11 bzw. Vergleichsbeispiel 12 angegeben.

**Tabelle 4**

| | Beispiel 10 | Beispiel 11 | Vergleichsbeispiel 12 |
|---|---|---|---|
| *M̅ₙ̅* GPC (THF) | 1171 | 1206 | 991 |
| *M̅_̅{̅w̅}̅*/*M̅ₙ̅* GPC (THF) | 1.12 | 1.08 | 1.12 |

### Beispiel 13

In einem ersten Verfahrensschritt wurde in einem 4-Hals-Rundkolben, der mit einem Rückflusskühler, einem Thermometer und einer Stickstoffeinleitung ausgerüstet war, 38 g (0,28 mol) von 3-Phenylpropan-1-ol als Starter vorgelegt und bei Zimmertemperatur unter Stickstoffatmosphäre 3,2 g (0,028 mol) Kalium-tert-butylat zugegeben. Die Temperatur der Reaktionsmischung wurde auf 110 °C erhöht und das gebildete t-Butanol unter Stickstoffbegasung abgedampft. Anschließend wurden 85,6 g (0,57 mol) Phenylglycidylether als Monomeres tropfenweise innerhalb einer Stunde zugegeben und die Mischung für weitere 2 Stunden bis zur totalen Umsetzung (festgestellt durch ¹H NMR-Analyse) polymerisiert.

Zur Mischung wurden 21,11 g (0,28 mol) Glycidol und 166,64 g (1,14 mol) Ethoxyethylglycidylether tropfenweise über 5 Stunden zugegeben. Nach der Zugabe wurde für 2 weitere Stunden bis zu einer totalen Umsetzung (bestimmt durch ¹H NMR-Analyse) erhitzt. Von diesem Zwischenprodukt (BEISPIEL 13') wurde mit Hilfe der vorstehend aufgeführten chromatographischen Methode das Zahlengewichtsmittel des Molekulargewichts und die Polydispersität des Blockcopolymeren ermittelt und in der nachfolgenden Tabelle 5 aufgeführt.

In einem weiteren Verfahrensschritt wurde das Blockcopolymere BEISPIEL 13' weiter modifiziert, indem die Acetalschutzgruppen des Blockcopolymeren abgespalten wurden. Dazu wurden 120 g des Zwischenprodukts (BEISPIEL 13') in 360 ml THF und 30 ml H₂O gelöst. Zu der klaren Lösung wurden 16 g HCl (37 Gew.%) gegeben. Die Lösung wurde bei 40°C 1 Stunde lang gerührt. Anschließend wurde die Mischung durch Zugabe von Na₂CO₃ unter Rühren neutralisiert. Nach der Zugabe von Natriumchlorid wurde die THF-Phase separiert. Die dabei erhaltene THF-Lösung wurde bis zur Trockenheit eingedampft. Anschließend wurde THF wieder zugegeben und die Lösung über Magnesiumsulfat getrocknet. Schließlich wurde THF soweit abgedampft, bis ein öliges Produkt erhalten wurde (BEISPIEL 13). Von diesem Blockcopolymeren wurde nach der vorstehend angegebenen chromatographischen Methode das Zahlengewichtsmittel des Molekulargewichts und die Polydispersität des Blockcopolymeren bestimmt, wobei die entsprechenden Werte in der nachfolgenden Tabelle 5 aufgeführt sind.

**Tabelle 5**

| | BEISPIEL 13 | BEISPIEL 13 |
|---|---|---|
| *M̅ₙ̅* GPC (THF) | 849 | 694 |
| *M̅_̅{̅w̅}̅*/*M̅ₙ̅* GPC (THF) | 1,49 | 1,43 |

### Beispiele 14, 16, 18 und Vergleichsbeispiele 15, 17, 19

| Beispiel | Struktur der Blockcopolymeren |
|---|---|
| BEISPIEL 14 | 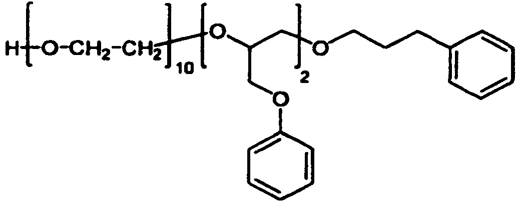 |
| Vergleichsbeispiel BEISPIEL 15 | 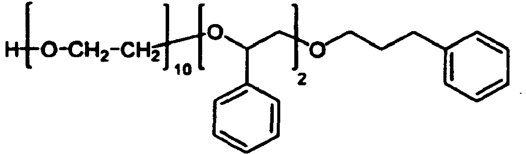 |
| BEISPIEL 16 | 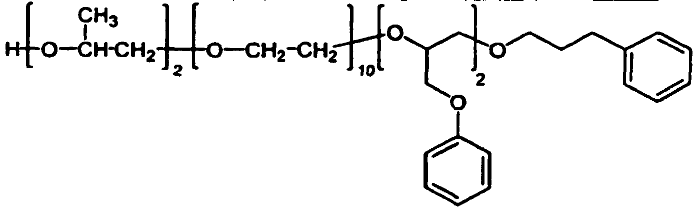 |
| Vergleichsbeispiel BEISPIEL 17 | 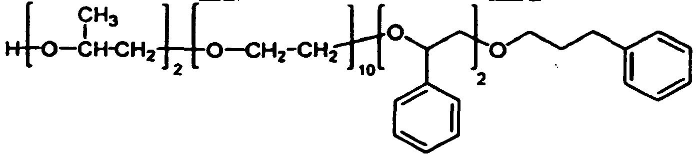 |
| BEISPIEL 18 | 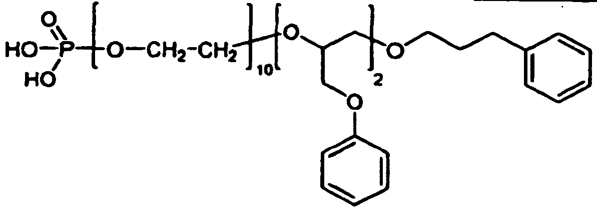 |
| Vergleichsbeispiel BEISPIEL 19 | 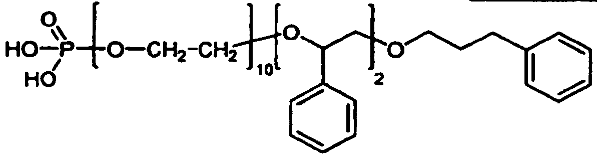 |

### Beispiel 14

a) Zur Herstellung des Dispergiermittels wurde in einer ersten Stufe ein mit 3-Phenylpropan-1-ol gestarteter Poly(phenylglycidylether) Makroinitiator (Makroinitiator 14) hergestellt.
   Dazu wurden in einem 500 ml 4-Halskolben, ausgestattet mit Rührer, Kühler, Thermometer und Tropftrichter, 136,2 g (1,0 mol) 3-Phenylpmpan-l-ol sowie 4,48 g (0,04 mol) Kalium-tert.-Butylat eingewogen. Unter N₂ und Rühren wurde auf 105°C aufgeheizt. Mit leichtem N₂-Strom wurde das bei 105°C entstehende tert.-Butanol in einer Stunde entfernt.
   Anschließend wurde die Temperatur auf 120°C erhöht und 300,34 g (2,0 mol) Phenylglycidylether innerhalb einer Std. zugetropft. Nach Ende der Zudosierung wurde weitere 4 Std bei 120°C gerührt bis eine komplette Umsetzung des Monomeren gem. ¹H NMR-Analyse feststellbar war.
b) Der so erhaltene Makroinitiator 14 wurde anschließend ethoxyliert.
   Diese Alkoxylierung wurde in einem Druckreaktor ausgestattet mit Rührer und Thermostat durchgeführt. 392,8 g (0,9 mol) Makroinitiator wurden eingefüllt, der Reaktor geschlossen, evakuiert und mit N2 inertisiert. Nach Aufheizen auf 135°C wurden 396,0 g (9,0 mol) Ethylenoxid so zudosiert, dass ein maximaler Druck von 5 bar nicht überschritten wurde. Nach Ende der Zudosierung und Nachreaktion bei 135°C, bis der Druck konstant blieb, wurde auf Raumtemperatur abgekühlt. Das erhaltene Blockcopolymere wurde anschließend in Methanol gelöst und mit einem sauren Ionentauscher Amberlite IR-120H neutralisiert. Nach dem Abfiltrieren des Ionentauschers wurde das Methanol im Vakuum entfernt.

### Beispiel 16

a) Zur Herstellung des Dispergiermittels wurde der mit 3-Phenylpropan-1-ol gestartete Poly(phenylglycidylether) Makroinitiator erhalten gemäß Beispiel 14 a) als Starter für eine Alkoxylierungsreaktion benutzt.
b) Ethoxylierung / Propoxylierung des Makroinitiators 14

Die Alkoxylierung wurde in einem Druckreaktor ausgestattet mit Rührer und Thermostat durchgeführt. 392,8 g (0,9 mol) Makroinitiator 14 wurden eingefüllt, der Reaktor geschlossen, evakuiert und mit N2 inertisiert. Nach Aufheizen auf 135°C wurden 396,0 g (9,0 mol) Ethylenoxid so zudosiert, dass ein maximaler Druck von 5 bar nicht überschritten wurde. Nach Ende der Zudosierung und Nachreaktion bei 135°C, bis der Druck konstant blieb, wurden in derselben Weise 104,4 g (1,8 mol) Propylenoxid zudosiert. Nach Ende der Zudosierung und Nachreaktion bei 135°C, bis der Druck konstant blieb, wurde auf Raumtemperatur abgekühlt. Das erhaltene Blockcopolymere wurde anschließend in Methanol gelöst und mit einem sauren Ionentauscher Arnberlite IR-120H neutralisiert. Nach dem Abfiltrieren des Ionentauschers wurde das Methanol im Vakuum entfernt.

### Beispiel 18

Zu 60 g des gemäß Beispiel 14 enthaltenen Blockcopolymeren wurden bei 60°C in einem Dreihalskolben mir Rückflusskühler und Rührer 8 g Polyphosphorsäure hinzugefügt. Anschließend wurde die Temperatur für 3 h auf 80°C erhöht und nach Abkühlung das Endgruppen modifizierte Blockcopolymere erhalten.

### Vergleichsbeispiele 15, 17, 19

Die Dispergiermittel (nicht erfindungsgemäß) wurden in derselben Weise synthetisiert wie die Dispergiermittel entsprechend BEISPIEL 14, BEISPIEL 16 bzw. BEISPIEL 18 mit Ausnahme, dass anstelle des Phenylglycidylethermonomers Styroloxid eingesetzt wurde.

In der nachfolgenden Tabelle 6 sind die nach der vorstehend angegebenen chromatographischen Methode bestimmten Zahlengewichtsmittel des Molekulargewichts bzw. die Polydispersität der Blockcopolymeren gemäß Beispiel 14 bzw. Beispiel 16 bzw. der Vergleichsbeispiele 15 bzw. 17 angegeben.

**Tabelle 6**

| | Beispiel 14 | Vergleichsbeispiel 15 | Beispiel 16 | Vergleichsbeispiel 17 |
|---|---|---|---|---|
| *M̅ₙ̅* GPC (THF) | 1036 | 852 | 1164 | 883 |
| *M̅_̅{̅w̅}̅*/*M̅ₙ̅* GPC (THF) | 1,17 | 1,22 | 1,19 | 1,29 |

In den nachfolgenden Anwendungsbeispielen wurde die Anwendung der erfindungsgemäß zum Einsatz kommenden Dispergiermittel im Vergleich zu nicht erfindungsgemäß verwendbaren Dispergiermittel als Additive in Pigmentpasten bzw. in entsprechenden Lacken getestet.

### I. Herstellung der Pigmentpasten (Anreibeart bindemittelfrei)

### I. 1. Pigmentkonzentrat 1

| | Gew.% |
|---|---|
| Dispergiermittel basierend auf 100% aktiver | 8 |
| Substanz | |
| BYK^{®}-017 | 1,0 |
| Flammruß 101 | 20,0 |
| Proxel GLX | 0.1 |
| Wasser | 70,9 |
| | 100,0 |

Dispergierung: 60 min bei 40°C und 8000 U/min, Dispermat CV, Glasperlen 1 mm

### I. 2. Pigmentkonzentrat 2

| | Gew.% |
|---|---|
| Dispergiermittel basierend auf 100% aktiver | 7,5 |
| Substanz | |
| BYK^{®}-017 | 1,0 |
| Hostaperm Rosa E | 25,0 |
| Proxel GLX | 0,1 |
| Wasser | 66,4 |
| | 100, 0 |

Dispergierung: 40 min bei 40°C und 10000 U/min, Dispermat CV, Glasperlen 1 mm

### I. 3. Pigmentkonzentrat 3

| | Gew.% |
|---|---|
| Dispergiermittel | 8,7 |
| basierend auf 100% aktiver | |
| Substanz | |
| BYK^{®}-017 | 1,0 |
| HeliogenBlau L 7101 F | 35,0 |
| Proxel GLX | 0,1 |
| Wasser | 55,2 |
| | 100,0 |

Dispergierung: 40 min bei 40°C und 10000 U/min, Dispermat CV, Glasperlen 1 mm

### I. 4. Pigmentkonzentrat 4

| | Gew.% |
|---|---|
| Dispergiermittel | 6 |
| basierend auf 100% aktiver | |
| Substanz | |
| BYK^{®}-017 | 1,0 |
| BYK^{®}-420 | 0,5 |
| Bayferrox 130M | 60,0 |
| Proxel GLX | 0,1 |
| Wasser | 32,4 |
| | 100,0 |

Dispergierung: 40 min bei 40°C und 10000 U/min. Dispermat CV, Glasperlen 1 mm (Mit DMEA auf pH 8 eingestellt)

| | |
|---|---|
| Proxel GLX | Biozid, Hersteller ICI |
| Hostaperm rosa E | Pigment, Hersteller Clariant |
| Hellogen Blau L 7101 F | Pigment, Hersteller BASF |
| Flammruß 101 | Pigment, Hersteller Degussa |
| Bayferrox 130M | Pigment, Hersteller Lanxess |
| BYK®-017 | Entschäumer, Hersteller Byk Chemie |
| BYK®-420 | Rheologieadditive, Hersteller Byk Chemie |
| DMEA | Dimethylethanolamine |

### II. Auflackung

Dazu wurden 2 kommerziell erhältliche Weißlacke verwendet:
1. Zero-PU-Weißlack, wässriges 1 K-Polyurethan (Lackdesign Seidenglanz, Hersteller Zero-Lack)
2. Caparol-Weißlack, lösungsmittelhaltig, Alkydharz-Basis (Capalac Hochglanz-Buntlack, Hersteller Caparol)

| Auflackung II A | Gew. % |
|---|---|
| jeweils | |
| Pigmentkonzentrat 1-3 | 1,5 |
| Zero-PU-Weisslack | 30,0 |
| | 31,5 |

Die Homogenisierung erfolgte durch Rütteln über 5 min.

| Auflackung II B | Gew. % |
|---|---|
| jeweils | |
| Pigmentkonzentrat 1-3 | 1,5 |
| Caparol-Weisslack | 30,0 |
| | 31,5 |

Die Homogenisierung erfolgte durch Rütteln über 5 min.

Die Beurteilung der vorstehend beschriebenen Pigmentkonzentrate I. 1. bis I. 3. bzw. Auflackung II A bzw. Auflackung II B enthaltend jeweils das Pigment Flammruß 101 (Tabelle 7), das Pigment Hostaperm rosa E. (Tabelle 8) bzw. Hellogen Blau L T101F (Tabelle 9) ist nachstehend aufgeführt.

Messung der Glanz- und ΔE-Werte mit Color-guide sphere d/8° spin von Byk Gardner.

**Tabelle 7 (Flammruß 101)**

| Dispergiermittel | Pigmentkonzentrat* | | Auflackung II A | | Auflackung II B | |
|---|---|---|---|---|---|---|
| | Lagerstabilität^{a} | Viskosität^{#} | Glanz R 60 | ΔE-Wert | Glanz R 60 | ΔE-Wert |
| Vgl. BEISPIEL | 3 | (-) | 20 | 0,21 | 92 | 0,22 |
| BEISPIEL 10 | 2 | 0,1 | 19 | 0,24 | 91 | 0,12 |
| BEISPIEL 11 | 2 | 0,15 | 19 | 0,31 | 91 | 0,13 |
| BEISPIEL 7 | 2 | 0,8 | 19 | 0,76 | 92 | 1,9 |
| BEISPIEL 4 | 2 | 0,35 | 19 | 0,33 | 92 | 0.83 |

| | | | | | | |
|---|---|---|---|---|---|---|
| * Beurteilung nach 1 Tag bei 25°C ^{#} in Pa*s bei 1/s Scherrate, gemessen mit Rheometer Stresstech von Reologica Instruments AB, Messkegel C 2,5 1° ^{a)} Beurteilungsskala: 1: kein Bodensatz 2: aufrührbarer Bodensatz 3: nicht aufrührbarer Bodensatz. (-) Viskosität kann nicht beurteilt werden | | | | | | |

**Tabelle 8 (Hostaperm rosa E.)**

| Dispergiermittel | Pigmentkonzentrat* | | Auflackung II A | | Auflackung II B | |
|---|---|---|---|---|---|---|
| | Lagerstabilität | Viskosität^{#} | Glanz R 60 | ΔE-Wert | Glanz R 60 | ΔE-Wert |
| Vgl. BEISPIEL 12 | 2 | 0,51 | 16 | 2,86 | 84 | 2,63 |
| BEISPIEL 10 | 2 | 0,15 | 17 | 2,28 | 90 | 1,58 |
| BEISPIEL 11 | 2 | 0,23 | 18 | 1,75 | 90 | 1,41 |
| Vgl. BEISPIEL 15 | 2 | 1,7 | 17 | 0,83 | 89 | 1,5 |
| BEISPIEL 14 | 2 | 0,57 | 18 | 0,62 | 89 | 1,46 |
| Vgl. BEISPIEL 17 | 2 | 0,45 | 16 | 1,43 | 89 | 1,22 |
| BEISPIEL 16 | 2 | 0,27 | 17 | 1,14 | 89 | 1,09 |

**Tabelle 9 (Hellogen Blau L 7101 F)**

| Dispergiermittel | Pigmentkonzentrat* | | Auflackung II A | | Auflackung II B | |
|---|---|---|---|---|---|---|
| | Lagerstabilität | Viskosität^{#} | Glanz R 60 | ΔE-Wert | Glanz R 60 | ΔE-Wert |
| Vgl. BEISPIEL | 2 | 7,1 | 19 | 0,17 | 89 | 0,75 |
| BEISPIEL 10 | 2 | 4,0 | 19 | 0,08 | 89 | 0,58 |
| BEISPIEL 11 | 2 | 4,6 | 19 | 0,1 | 89 | 0,2 |

**Tabelle 10 (Bayferrox 130M)**

| Dispergiermittel | Pigmentkonzentrat* | | Auflackung II A | | Auflackung II B | |
|---|---|---|---|---|---|---|
| | Lagerstabilität | Viskosität^{#} | Glanz R 60 | ΔE-Wert | Glanz R 60 | ΔE-Wert |
| Vgl. BEISPIEL 19 | 2 | 10,5 | 23 | 4,67 | 84 | 1,61 |
| BEISPIEL 18 | 2 | 5,75 | 23 | 3,48 | 89 | 0,64 |

Die Ergebnisse der Beispiele 10-11 bzw.14 bzw. 16 bzw. 18 zeigen, dass mit Hilfe der Glycidylether Blockcopolymere als Dispergiermittel Pigmentkonzentrate bzw. Lacke mit einer niedrigeren Viskosität, aber hoher Pigmentkonzentration bei sonst unveränderten Eigenschaften wie Lagerstabilität erhalten werden können.

Die niedrigere Viskosität und hohe Lagerstabilität einer Pigmentpaste hat den Vorteil, dass ein hoher Pigmentfüllgrad im Konzentrat erzielt werden kann.

### V. Emulsionen enthaltend Glycidylether-Blockcopolymere

V. 1. Zur Herstellung einer Wasser-in-Öl Emulsion enthaltend das Blockcopolymere gemäß BEISPIEL 3 als Emulgator wurde wie folgt vorgegangen.

75 g eines ungesättigten Polyesters (NORSODYNE® S 22263 TAE von Cray Valley) wurde in einen Polypropylen Container gegeben. Unter Rühren mit einem Hochgeschwindigkeitsrührer bei 1980 rpm wurde der Emulgator (=das Blockcopolymere BEISPIEL 3) als wässrige Lösung zugegeben. Bezogen auf die Menge des Polyesters wurde eine 1 Gew.%ige Emulgator-Lösung hinzugefügt. Anschließend wurde nach und nach weiteres Wasser zu der Polyester-Emulgator-Wasser-Pre-Emulsion zugegeben. Das Verhältnis der Gesamtmenge Wasser zu Polyester in der Formulierung betrug 25:75. Nachdem das Wasser vollständig hinzugefügt worden war, ruhte die Emulsion für 30 Sekunden, um die eingeschlossene Luft entweichen zu lassen, bevor sie in eine Glasviole transferiert und dort verschlossen bei Zimmertemperatur gelagert wurde.

V. 2. Die Wasser-in-Öl Emulsion hatte eine Viskosität (Brookfield RVT-Typ Viskosimeter, Spindel 5, 50 rpm, 23°C von 288 M.Pa.s. Die Emulsion war mindestens 3 Monate lagerstabil.

## Patentansprüche

1. Eine Zusammensetzung umfassend wenigstens ein blockartig aufgebautes amphiphites Glycidylether-Copolymeres aufgebaut aus der folgenden Struktureinheit I und wenigstens einer der folgenden Struktureinheiten II - V, wobei die Struktureinheit IV immer zusammen mit wenigstens einer der Struktureinheiten II, III und V angeordnet ist, 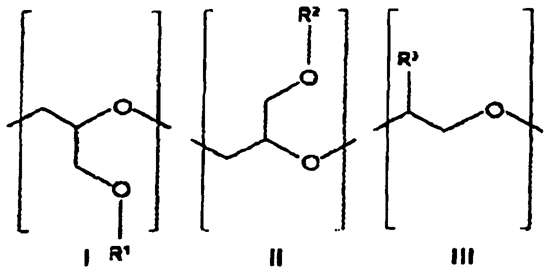 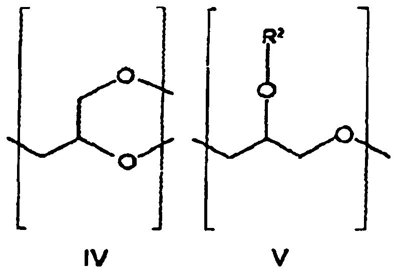 und den Endgruppen -O-R⁴ und/oder R⁵, worin
R¹ für einen linearen oder verzweigten Alkylrest mit vorzugsweise 1-20 C-Atomen oder einen acyclischen Alkylrest mit vorzugsweise 4-10 C-Atomen, einen Arylrest, einen Arylalkylenrest, einen Heteroarylrest oder Heteroarylalkylenrest bei dem jeweils der Aryl- bzw. Heteroarylring substituiert sein kann, steht;
R², gleich oder verschieden, für Wasserstoff und/oder für eine Carboxymethylengruppe oder ein entsprechendes Salz oder eine entsprechende Alkylestergruppe, ein Monoesterrest der Maleinsäure oder ein entsprechendes Monosatz, ein Phosporsäurerest oder ein entsprechendes Salz, ein Sulfonsäurerest oder ein entsprechendes Salz oder ein Sulfosuccinsäurerest oder ein entsprechendes Salz oder bis zu höchstens 20 % der Reste R₂ für eine OH-Schutzgruppe, vorzugsweise Acetalgruppe oder t-Butylgruppe, stehen:
R³ für Wasserstoff und/oder einen linearen oder verzweigten Alkylrest mit 1 bis 6 C-Atomen und/oder einen cyclischen Alkylrest mit 4-6 C-Atomen steht;
R⁴ für einen linearen, verzweigten oder cyclischen Alkylrest, der mit wenigstens einem Arylrest oder Arylalkylenrest substituiert sein kann, einen ggfs. substituierten Arylrest oder Arylalkylenrest oder einen Polyalkylenoxid Rest, der vorzugsweise wenigstens 2, besonders bevorzugt 2-5 wiederkehrende Einheiten mit einer Alkoxygruppe mit vorzugsweise 1-5 C-Atomen aufweist, steht;
R⁵, gleich oder verschieden von R², ist ein Rest mit der Bedeutung von R² mit Ausnahme von OH-Schutzgruppen.
wobei die Struktureinheiten gradientenartig, statistisch oder jeweils blockartig angeordnet sind und
wobei die Struktureinheit I mindestens 2-fach, vorzugsweise 2 bis 100 fach, besonders bevorzugt 2 bis 50 fach vorliegt., das Glycidylether-Copolymere wenigstens einen Block aus der wiederkehrenden Struktureinheit I aufweist, wovon wenigstens eine der wiederkehrenden Struktureinheiten I einen aromatischen Rest trägt,
und wobei der Anteil der ggfs. vorhandenen Struktureinheiten IV 0 bis höchstens 50 % der Gesamtzahl der Struktureinheiten II bis V beträgt,
als Dispergiermittel und wenigstens einen dispergierten Feststoff oder
als Emulgator und ein auszuhärtendes, ungesättigtes Polymersystem in Form einer Wasser in Öl Emulsion,
mit der Maßgabe, dass eine wässrige Zusammensetzung aus einem Glyddylblockcopolymeren aus 5 Phenylglycidylether-Einheiten und 67 Ethylenoxid-Einhetten und einem pharmazeutischan wirkstoff, wie Griseofulvin, ausgenommen ist, ebenso wie eine wässrige Zusammensetzung aus einem Glycidylblockcopolymeren bestehend aus 2 Blöcken aus jeweils 71 oder 62 oder 38 Ethylenoxid-Einheiten und einem dazwischenliegenden Block aus 7, 8 oder 12 Phenylglycidylether-Einheiten und einem schwerlöslichen pharmazeutischen Wirkstoff, wie Griseofulvin, ausgenommen ist.

2. Eine Zusammensetzung nach Anspruch 1 **dadurch gekennzeichnet dass** die Anzahl der Struktureinheiten II bis V des Glycidylether-Copolymeren mindestens der Anzahl der Stuktureinheiten I entspricht, vorzugsweise um mindestens 20 %, besonders bevorzugt um mindestens 50 % höher liegt als die Anzahl der Struktureinheiten I.

3. Eine Zusammensetzung nach Anspruch 1 oder 2, **dadurch gekennzeichnet, dass** als dispergierter Feststoff wenigstens ein dispergiertes Pigment vorliegt.

4. Eine Zusammensetzung nach einem der Ansprüche 1 bis 3, **dadurch gekennzeichnet, dass** das Glycidylether-Copolymere wenigstens einen Block aus der wiederkehrenden Struktureinheit I und wenigstens einen Block aus der wiederkehrenden Struktureinheit II aufweist.

5. Eine Zusammensetzung nach einem der Ansprüche 1 bis 3, **dadurch gekennzeichnet, dass** das Glycidylether-Copolymere wenigstens einen Block aus der wiederkehrenden Struktureinheit I und wenigstens einen Block aus der wiederkehrenden Struktureinheit III aufweist.

6. Eine Zusammensetzung nach einem der Ansprüche 1 bis 3, **dadurch gekennzeichnet, dass** das Glycidylether-Copolymere wenigstens einen Block aus der wiederkehrenden Struktureinheit I und wenigstens einen Block aus wiederkehrenden Struktureinheiten II und III aufweist.

7. Eine Zusammensetzung nach einem der Ansprüche 1 bis 3, **dadurch gekennzeichnet, dass** das Glycidylether-Copolymere als Anfangsblock, verbunden mit dem Startermolekül, einen Block aus der wiederkehrenden Struktureinheit I und als Abschlussblock, verbunden mit einer der Endgruppen, einen Block aus der Struktureinheit IV und aus zumindest einer copolymerisierten Struktureinheit II, III oder V aufweist.

8. Eine Zusammensetzung nach Anspruch 7, **dadurch gekennzeichnet, dass** der Anteil der Struktureinheit IV höchstens 30 %, bevorzugt höchstens 20 % der Gesamtzahl der vorhandenen Struktureinheiten II bis V beträgt.

9. Eine Zusammensetzung nach einem der Ansprüche 1 bis 8, **dadurch gekennzeichnet, dass** in den Struktureinheiten
R¹ für einen Phenyl- oder Naphtylrest, der ggfs. substituiert sein kann, oder einen Benzylrest steht;
R² die in Anspruch 1 angegebene Bedeutung hat, wobei als Salze Alkalimetallsalze vorzugsweise Natrium- oder Kaliumsalze, oder Ammoniumsalze vorllegen;
R³ für Wasserstoff oder einen Methylrest steht:
R⁴ für einen Alkylrest mit 1 bis 10 C-Atomen, einen Phenylalkylenrest mit 7 bis 10 C-Atomen oder einen Polyethylenoxid-Rest oder einen Rest eines Copolymeren von Ethylenoxid und Propylenoxid mit jeweils 2 bis 5 wiederkehrenden Alkylenoxid Einheiten steht;
R⁵, gleich oder verschieden von R², ist ein Rest mit der für R² angegebenen Bedeutung, mit Ausnahme einer OH-Schutzgruppe.
wobei die Struktureinheit I 2 bis 20 fach, bevorzugt 2 bis 10 fach vorliegt.

10. Eine Zusammensetzung nach einem der Ansprüche 1 bis 9, **dadurch gekennzeichnet, dass** das Glycidylether-Copolymere durch anionische Polymerisation hergestellt worden ist.

11. Eine Zusammensetzung nach einem der Ansprüche 1 bis 10, **dadurch gekennzeichnet, dass** sie als eine wässrige Dispersion vorliegt.

12. Eine Verwendung eines Glycidylether-Copolymeren nach einem der Ansprüche 1 bis 11 als Dispergiermittel oder Phasenvermittler.

13. Eine Verwendung nach Anspruch 12 zur Dispergierung von Feststoffen, vorzugsweise Pigmenten.

14. Eine Verwendung nach Anspruch 12 oder 13 zur Herstellung einer Zusammensetzung nach einem der Ansprüche 1-11.

15. Eine Pigmentdispersion enthaltend eine Zusammensetzung nach einem der Ansprüche 1 bis 11.

16. Eine Pigmentpaste enthaltend eine Pigmentdispersion nach Anspruch 15.

17. Eine Überzugzusammensetzung enthaltend eine Zusammensetzung nach einem der Ansprüche 1 bis 11.

18. Ein Überzug aus einer Überzugzusammensetzung nach Anspruch 17.

19. Eine Formmasse enthaltend eine Zusammensetzung nach einem der Ansprüche 1 bis 11, vorzugsweise eine Pigmentdispersion nach Anspruch 15.

20. Ein Formkörper aus einer Formmasse nach Anspruch 19.

21. Eine Zusammensetzung nach einem der Ansprüche 1 bis 11, **dadurch gekennzeichnet, dass** das ungesättigte Polymersystem ein ungesättigter Polyester und α, β-ungesättigen Monomere umfasst.

## Claims

1. Composition comprising at least one amphiphilic glycidyl ether copolymer of blocklike construction, built of the following structural unit I and at least one of the following structural units II - V, the structural unit IV always being arranged together with at least one of the structural units II, III, and V, 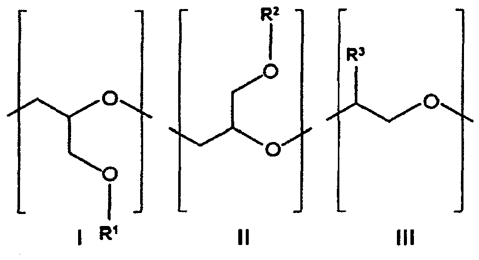 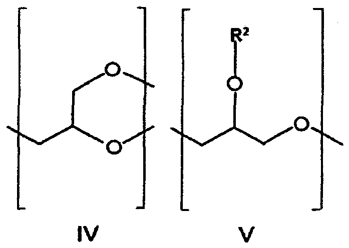 and from the end groups -O-R⁴ and/or R⁵, in which
R¹ is a linear or branched alkyl radical having preferably 1-20 C atoms or a cyclic alkyl radical having preferably 4-10 C atoms, an aryl radical, an aryl alkylene radical, a heteroaryl radical or heteroaryl alkylene radical, in each of which the aryl or heteroaryl ring may be substituted;
R², identical or different, represents hydrogen and/or a carboxymethylene group or a corresponding salt or a corresponding alkyl ester group, a monoester radical of maleic acid or a corresponding mono salt, a phosphoric acid radical or a corresponding salt, a sulfonic acid radical or a corresponding salt or a sulfosuccinic acid radical or a corresponding salt, or up to 20% at most of the radicals R² represent an OH-protective group, preferably acetal group or tert-butyl group;
R³ represents hydrogen and/or a linear or branched alkyl radical having 1 to 6 C atoms and/or a cyclic alkyl radical having 4-6 C atoms;
R⁴ represents a linear, branched or cyclic alkyl radical which may be substituted by at least one aryl radical or arylalkylene radical, or an optionally substituted aryl radical or arylalkylene radical or a polyalkylene oxide radical which has preferably at least 2, more preferably 2-5 recurring units with an alkoxy group having preferably 1-5 C atoms;
R⁵, identical to or different from R², represents a radical having the definition of R² with the exception of OH-protective groups,
the structural units being of gradientlike, random or respectively blocklike arrangement, and whereby
the structural unit I being present at least 2 times, preferably 2 to 100 times, more preferably 2 to 50 times, the glycidyl ether copolymer has at least one block of the recurring structural unit I, of which at least one of the recurring structural units I carries an aromatic radical,
and whereby the fraction of the optionally present structural units IV is 0% to 50% at most of the total number of structural units II to V,
as dispersant and at least one dispersed solid or
as emulsifier and an unsaturated polymer system, which is to be cured, in the form of a water-in-oil emulsion,
with the proviso that an aqueous composition of a glycidyl block copolymer having 5 phenyl glycidyl ether units and 67 ethylene oxide units and an active pharmaceutical ingredient, such as griseofulvin, is excluded as well as an aqueous composition of a glycidyl block copolymer consisting of 2 blocks each having 71 or 62 or 38 ethylene oxide units and an intermediately arranged block of 7, 8 or 12 phenyl glycidyl ether units and an active pharmaceutical ingredient of low solubility, such as griseofulvin, is excluded.

2. Composition according to Claim 1, **characterized in that** the number of structural units II to IV of the glycidyl ether copolymer corresponds at least to the number of structural units I, being preferably at least 20%, more preferably at least 50%, higher than the number of structural units I.

3. Composition according to Claim 1 or 2, **characterized in that** at least one dispersed pigment is present as dispersed solid.

4. Composition according to any one of Claims 1 to 3, **characterized in that** the glycidyl ether copolymer has at least one block of the recurring structural unit I and at least one block of the recurring structural unit II.

5. Composition according to any one of Claims 1 to 3, **characterized in that** the glycidyl ether copolymer has at least one block of the recurring structural unit I and at least one block of the recurring structural unit III.

6. Composition according to any one of Claims 1 to 3, **characterized in that** the glycidyl ether copolymer has at least one block of the recurring structural unit I and at least one block of recurring structural units II and III.

7. Composition according to any one of Claims 1 to 3, **characterized in that** the glycidyl ether copolymer has as starting block, connected with the starter molecule, a block of the recurring structural unit I and as end block, connected with one of the end groups, a block of the structural unit IV and of at least one copolymerized structural unit II, III or V.

8. Composition according to Claim 7, **characterized in that** the fraction of structural unit IV is 30% at most, preferably 20% at most, of the total number of structural units II to V present.

9. Composition according to any one of Claims 1 to 8, **characterized in that** in the structural units
R¹ is a phenyl or napthyl radical, which may optionally be substituted, or is a benzyl radical;
R² has the definition indicated in Claim 1, with salts present being alkyl metal salts, preferably sodium or potassium salts, or ammonium salts;
R³ is hydrogen or a methyl radical;
R⁴ is an alkyl radical having 1 to 10 C atoms, a phenyl alkylene radical having 7 to 10 C atoms or a polyethylene oxide radical or a radical of a copolymer of ethylene oxide and propylene oxide having in each case 2 to 5 recurring alkylene oxide units;
R⁵, identical to or different from R², is a radial with the definition indicated for R², with the exception of an OH-protective group,
whereby the structural unit I being present 2 to 20 times, preferably 2 to 10 times.

10. Composition according to any one of Claims 1 to 9, **characterized in that** the glycidyl ether copolymer has been prepared by anionic polymerization.

11. Composition according to any one of Claims 1 to 10, **characterized in that** it is present as an aqueous dispersion.

12. Use of a glycidyl ether copolymer according to any one of claims 1 to 11 as dispersant or phase mediator.

13. Use according to claim 12 for dispersing solids, preferably pigments.

14. Use according to claim 12 or 13 for preparing a composition according to any one of Claims 1-11.

15. Pigment dispersion comprising a composition according to any one of Claims 1 to 11.

16. Pigment paste comprising a pigment dispersion according to Claim 15.

17. Coating composition comprising a composition according to any one of Claims 1 to 11.

18. Coating of a coating composition according to Claim 17.

19. Molding composition comprising a composition according to any one of Claims 1 to 11, preferably a pigment dispersion according to Claim 15.

20. Molding formed from a molding composition according to Claim 19.

21. Composition according to any one of Claims 1 to 11, **characterized in that** the unsaturated polymer system comprises an unsaturated polyester and α,β-unsaturated monomers.

## Revendications

1. Composition comprenant au moins un copolymère de glycidyléther amphiphile à blocs, formé de l'unité de structure I suivante et d'au moins une des unités de structure II-V suivantes, l'unité de structure IV étant toujours agencée ensemble avec au moins une des unités de structure II, III et V, 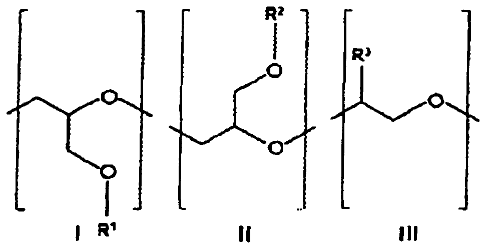 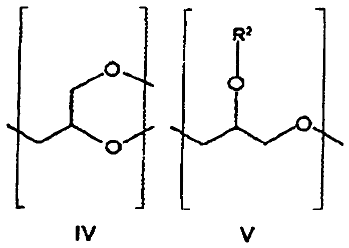 et des groupes terminaux -O-R⁴ et/ou R⁵, où
R¹ représente un radical alkyle linéaire ou ramifié comprenant de préférence 1-20 atomes de carbone ou un radical alkyle cyclique comprenant de préférence 4-10 atomes de carbone, un radical aryle, un radical arylalkylène, un radical hétéroaryle ou un radical hétéroarylalkylène, dans lequel à chaque fois le cycle aryle ou, selon le cas, hétéroaryle peut être substitué ;
R² identiques ou différents, représentent hydrogène et/ou un groupe carboxyméthylène ou un sel correspondant ou un groupe ester d'alkyle correspondant, un radical monoester de l'acide maléique ou un monosel correspondant, un radical acide phosphorique ou un sel correspondant, un radical acide sulfonique ou un sel correspondant ou un radical acide sulfosuccinique ou un sel correspondant ou jusqu'à au plus 20% des radicaux R² représentent un groupe de protection de la fonction OH, de préférence un groupe acétal ou un groupe t-butyle ;
R³ représente hydrogène et/ou un radical alkyle linéaire ou ramifié comprenant 1 à 6 atomes de carbone et/ou radical alkyle cyclique comprenant 4-6 atomes de carbone ;
R⁴ représente un radical alkyle linéaire, ramifié ou cyclique, qui peut être substitué par au moins un radical aryle ou un radical arylalkylène, un radical aryle ou un radical arylalkylène le cas échéant substitué ou un radical poly(oxyde d'alkylène) qui présente de préférence au moins 2, de manière particulièrement préférée 2-5 unités récurrentes comprenant un groupe alcoxy présentant de préférence 1-5 atomes de carbone ;
R⁵ identique ou différent de R², représente un radical ayant la signification de R² à l'exception des groupes de protection de la fonction OH, les unités de structure étant disposées par gradient, statistiquement ou à chaque fois en blocs et
l'unité de structure I étant présente au moins 2 fois, de préférence 2 à 100 fois, de manière particulièrement préférée 2 à 50 fois, le copolymère de glycidyléther présentant au moins un bloc de l'unité de structure récurrente I, dont au moins une des unités de structure récurrentes I porte un radical aromatique,
et la proportion des unités de structure IV le cas échéant présentes étant de 0 à au maximum 50% du nombre total des unités de structure II à V,
comme dispersant et au moins un solide dispersé ou
comme émulsifiant et un système polymère insaturé à durcir sous forme d'une émulsion eau-dans-huile,
à condition qu'une composition aqueuse d'un copolymère à blocs de glycidyle constitué par 5 unités de phénylglycidyléther et 67 unités d'oxyde d'éthylène et d'une substance active pharmaceutique, telle que la griséofulvine, soit exclue, et qu'une composition aqueuse d'un copolymère à blocs de glycidyle constitué par 2 blocs constitués à chaque fois par 71 ou 62 ou 38 unités d'oxyde d'éthylène et un bloc situé entre ceux-ci de 7, 8 ou 12 unités de phénylglycidyléther et d'une substance active pharmaceutique peu soluble, telle que la griséofulvine soit également exclue.

2. Composition selon la revendication 1, **caractérisée en ce que** le nombre d'unités de structure II à V du copolymère de glycidyléther correspond au moins au nombre d'unités de structure I et est de préférence supérieur d'au moins 20%, de manière particulièrement préférée d'au moins 50% au nombre d'unités de structure I.

3. Composition selon la revendication 1 ou 2, **caractérisée en ce qu'**au moins un pigment dispersé est présent comme solide dispersé.

4. Composition selon l'une quelconque des revendications 1 à 3, **caractérisée en ce que** le copolymère de glycidyléther présente au moins un bloc de l'unité de structure récurrente I et au moins un bloc de l'unité de structure récurrente II.

5. Composition selon l'une quelconque des revendications 1 à 3, **caractérisée en ce que** le copolymère de glycidyléther présente au moins un bloc de l'unité de structure récurrente I et au moins un bloc de l'unité de structure récurrente III.

6. Composition selon l'une quelconque des revendications 1 à 3, **caractérisée en ce que** le copolymère de glycidyléther présente au moins un bloc de l'unité de structure récurrente I et au moins un bloc des unités de structure récurrentes II et III.

7. Composition selon l'une quelconque des revendications 1 à 3, **caractérisée en ce que** le copolymère de glycidyléther présente, comme bloc de départ, lié à la molécule de départ, un bloc de l'unité de structure récurrente I et comme bloc terminal, lié à un des groupes terminaux, un bloc de l'unité de structure IV et d'au moins une unité de structure copolymérisée II, III ou V.

8. Composition selon la revendication 7, **caractérisée en ce que** la proportion de l'unité de structure IV représente au plus 30% de préférence au plus 20% du nombre total des unités de structure II à V présentes.

9. Composition selon l'une quelconque des revendications 1 à 8, **caractérisée en ce que** dans les unités de structure
R¹ représente un radical phényle ou naphtyle, qui peut le cas échéant être substitué, ou un radical benzyle ;
R² présente la signification indiquée dans la revendication 1, les sels étant de préférence des sels de métal alcalin, de préférence des sels de sodium ou de potassium, ou des sels d'ammonium ;
R³ représente hydrogène ou un radical méthyle ;
R⁴ représente un radical alkyle comprenant 1 à 10 atomes de carbone, un radical phénylalkylène comprenant 7 à 10 atomes de carbone ou un radical poly(oxyde d'éthylène) ou un radical d'un copolymère d'oxyde d'éthylène et d'oxyde de propylène comprenant à chaque fois 2 à 5 unités récurrentes d'oxyde d'alkylène ;
R⁵, identique ou différent de R², représente un radical ayant la signification indiquée pour R² à l'exception d'un groupe de protection de la fonction OH,
l'unité de structure I étant présente 2 à 20 fois, de préférence 2 à 10 fois.

10. Composition selon l'une quelconque des revendications 1 à 9, **caractérisée en ce que** le copolymère de glycidyléther a été préparé par polymérisation anionique.

11. Composition selon l'une quelconque des revendications 1 à 10, **caractérisée en ce qu'**elle se trouve sous forme d'une dispersion aqueuse.

12. Utilisation d'un copolymère de glycidyléther selon l'une quelconque des revendications 1 à 11 comme dispersant ou promoteur de phases.

13. Utilisation selon la revendication 12 pour la dispersion de solides, de préférence de pigments.

14. Utilisation selon la revendication 12 ou 13 pour la préparation d'une composition selon l'une quelconque des revendications 1 à 11.

15. Dispersion pigmentaire contenant une composition selon l'une quelconque des revendications 1 à 11.

16. Pâte pigmentaire contenant une dispersion pigmentaire selon la revendication 15.

17. Composition de revêtement contenant une composition selon l'une quelconque des revendications 1 à 11.

18. Revêtement constitué par une composition de revêtement selon la revendication 17.

19. Masse de moulage contenant une composition selon l'une quelconque des revendications 1 à 11, de préférence une dispersion pigmentaire selon la revendication 15.

20. Corps moulé constitué par une masse de moulage selon la revendication 19.

21. Composition selon l'une quelconque des revendications 1 à 11, **caractérisée en ce que** le système de polymère insaturé comprend un polyester insaturé et des monomères α,α-insaturés.
